# EUROPÄISCHE PATENTSCHRIFT

(11) **EP 4 702 322 B1**
(45) Veröffentlichungstag und Bekanntmachung des Hinweises auf die Patenterteilung: **23.09.2026**
(21) Anmeldenummer: 24722136.9
(22) Anmeldetag: 23.04.2024
(51) Int. Cl.: G01J 1/02, G01J 1/04, G01J 1/42

(54) **GONIORADIOMETER UND VERFAHREN ZUR RICHTUNGSABHAENGIGEN MESSUNG MINDESTENS EINER LICHTTECHNISCHEN ODER RADIOMETRISCHEN KENNGROESSE EINER OPTISCHEN STRAHLUNGSQUELLE**
GONIORADIOMETER AND METHOD FOR DIRECTION-DEPENDENT MEASUREMENT OF AT LEAST ONE LIGHT-RELATED OR RADIOMETRIC PARAMETER OF AN OPTICAL RADIATION SOURCE
RADIOGONIOMÈTRE ET PROCÉDÉ POUR MESURER EN FONCTION DE LA DIRECTION AU MOINS UNE CARACTÉRISTIQUE D'ÉCLAIRAGE OU UNE CARACTÉRISTIQUE RADIOMÉTRIQUE D'UNE SOURCE DE RAYONNEMENT OPTIQUE

(30) Priorität: 27.04.2023 DE 102023110897
(43) Veröffentlichungstag der Anmeldung: 04.03.2026
(73) Patentinhaber: LMT Lichtmesstechnik GmbH Berlin, 10587 Berlin (DE)
(72) Erfinder: REINERS, Thomas, 10589 Berlin (DE); DIEM, Carsten, 13505 Berlin (DE); HAMMER, Raymund, 14057 Berlin (DE); RADEWALDT, Konstantin, 14089 Berlin (DE)
(74) Vertreter: Müller, Wolfram Hubertus
(86) Internationale Anmeldenummer: PCT/EP2024/061009
(87) Internationale Veröffentlichungsnummer: WO 2024/223520

(56) Entgegenhaltungen:
- US-A1- 2017 165 848
- FISKE DPIX-A XEROX NEW ENTERPRISE COMPANY T G ET AL: "33.2: Viewing Angle: A Matter of Perspective", 1998 SID INTERNATIONAL SYMPOSIUM - MAY 17-22, 1998, ANAHEIM, CALIFORNIA, 17 May 1998 (1998-05-17), XP007008651
- WEISSHAAR JÜRGEN P.: "LIGHT & ENGINEERING", vol. 23, no. 4, 1 January 2015 (2015-01-01), pages 75 - 80, XP093172236, Retrieved from the Internet <URL:https://www.opsira.de/fileadmin/benutzerdaten/opsira-de/pdf/Light_and_Engineering_Vol._23_No_4_-_2015_-_opsira_next_generation_goniophotometry.pdf> [retrieved on 20240611]
- ANONYM: "Brandmeldeanlagen - Teil 23: Feueralarmeinrichtungen. Optische Signalgeber; Deutsche Fassung EN 54-23: 2010", DEUTSCHE NORM DIN EN 54-23, 1 June 2010 (2010-06-01), pages 1 - 69, XP055764119
- BS ISA: "Robots and robotic devices - Coordinate systems and motion nomenclatures", 1 January 2013 (2013-01-01), XP093175055, Retrieved from the Internet <URL:http://higiene.unex.es/Bibliogr/ISO_BS_USDA/ISO_BS/BS%20ISO/BS%20ISO%2009787-2013%20(2015).pdf> [retrieved on 20240611]
- SSL RESOURCE: "Goniophotometer Catalogue 2022/II", 1 January 2022 (2022-01-01), XP093172219, Retrieved from the Internet <URL:https://pro-lite.co.uk/wp-content/uploads/2022/10/SSL-Goniophotometer-Catalogue-Sept-2022.pdf>
- LEE DONG-HOON ET AL: "APMP Supplementary Comparisons of LED Measurements", 1 July 2012 (2012-07-01), XP093170446, Retrieved from the Internet <URL:https://www.bipm.org/documents/20126/44555632/APMP.PR-S3.c.pdf/7476eebf-7d9f-22f1-1cf8-30850af24947>
- "Measurement of absolute luminous intensity distributions", 1 January 1987, TECHNICAL REPORT / CIE, COMMISSION INTERNATIONALE DE L'ÉCLAIRAGE, PAGE(S) 1 - 44, ISBN: 978-3-900734-05-3, XP009554701

## Beschreibung

### Beschreibung

Die Erfindung betrifft ein Gonioradiometer und ein Verfahren zur richtungsabhängigen Messung mindestens einer lichttechnischen oder radiometrischen Kenngröße einer optischen Strahlungsquelle.

Für die Messung von lichttechnischen oder radiometrischen Kenngrößen von Lampen und Leuchten werden üblicherweise Gonioradiometer verwendet. Dabei handelt es sich um mechanisch-optische Messsysteme, mit denen die Richtungsabhängigkeit von Größen zur Beschreibung optischer Strahlung bestimmbar ist. Beispielsweise können je nach verwendetem Sensor oder Messgerätekopf die Lichtstärkeverteilung oder der Farbverteilungskörper einer Lichtquelle bestimmt werden. Die Licht- oder Strahlungsquelle ist mit ihrem Lichtschwerpunkt im Zentrum des Gonioradiometers und dabei im Koordinatenursprung eines Kugel-Koordinatensystems angeordnet. Messwerte einer lichttechnischen oder radiometrischen Kenngröße können für diesen Fall goniometrisch, d. h. für alle Richtungen, durch Rotieren der Licht- oder Strahlungsquelle oder durch Bewegen des Sensors nacheinander in verschiedenen Winkelbereichen gemessen werden.

Durch Auswertung einzelner Richtungen und/oder durch die Integration der Messergebnisse über Teilbereiche oder den gesamten Raumwinkel eines Verteilungskörpers ergeben sich die lichttechnischen oder radiometrischen Kenngrößen der Quelle.

Eine lichttechnische oder radiometrische Kenngröße wie z.B. die Lichtstärke ist eine richtungsabhängige Größe, deren Ausstrahlungsrichtung allgemein durch zwei Winkel in einem mit der Lichtquelle verbundenem Kugelkoordinatensystem angegeben werden kann. Es hat sich die Beschreibung durch bestimmte Ebenensysteme durchgesetzt, die als A-Ebenen, B-Ebenen und C-Ebenen bezeichnet werden. Diese Ebenen sind in dem Dokument CIE No 70 (1987): "The measurement of absolute luminous intensity distributions", Central Bureau of the CIE, ISBN 3 900 734 05 4 beschrieben.

In der Praxis haben sich bestimmte Gonioradiometertypen bewährt, die ebenfalls im Dokument CIE No 70 (1987) definiert sind. Bei Gonioradiometern des Typs 1.1 bis 1.3 wird die Lichtquelle während einer Messung rotiert, während der Sensor ortsstabil ist. Bei Gonioradiometern des Typs 3 wird die Strahlungsquelle um eine Achse gedreht und ein Sensor entlang einer geraden Linie, die parallel zur Drehachse verläuft, verfahren. Dabei ist die Lichtquelle bzw. Strahlungsquelle mit ihrem Lichtschwerpunkt bzw. Strahlungsschwerpunkt im Zentrum des Gonioradiometers angebracht.

Es besteht zunehmend ein Interesse, lichttechnische oder radiometrische Kenngrößen von Lampen und Leuchten in dem Zustand zu erfassen, in dem diese sich bei ihrer Nutzung befinden, also in ihrem eingebauten Zustand. Eine wichtige Anwendung hierbei ist die Messung der Qualität der Scheinwerferbeleuchtung und/oder der lichttechnischen Signalfunktionen eines Fahrzeugs im eingebauten Zustand. Hierbei besteht allerdings das Problem, dass Lampen und Leuchten in ihrem für die Nutzung vorgesehenen Zustand typischerweise eine größere physische Ausdehnung besitzen, als wenn nur die Lampe bzw. Leuchte für sich genommen ausgemessen wird. Ein Beispiel hierfür sind Scheinwerfermodule für Kraftfahrzeuge, die neben mehreren Scheinwerfern auch Spiegel und ein Gehäuse umfassen, so dass insgesamt eine nicht unerhebliche räumliche Ausdehnung vorliegt. Aktuelle Design-Trends im Fahrzeug favorisieren dabei auch Leuchten, die sich über die gesamte Fahrzeugbreite erstecken Die Vornahme einer gonioradiometrischen Messung an solchen Modulen kann in praktischer Hinsicht zu Problemen führen, da das Kippen bzw. Drehen solcher Module im Rahmen der gonioradiometrischen Messung aufgrund deren Gewicht und räumlicher Ausdehnung nichttrivial und mit einem erheblichen Platzbedarf verbunden ist.

Das Dokument FISKE DPIX-A XEROX NEW ENTERPRISE COMPANY T G ET AL: 11 33.2: Viewing Angle: A Matter of Perspective", 1998 SID INTERNATIONAL SYMPOSIUM -MAY 17-22, 1998, ANAHEIM, CALIFORNIA, 17. Mai 1998 (1998-05-17), XP007008651, offenbart ein gattungsgemäßes Gonioradiometer.

Die US 2017/165848 A1 offenbart ein Verfahren und ein Gonioradiometer zur richtungsabhängigen Messung mindestens einer lichttechnischen oder radiometrischen Kenngröße einer optischen Strahlungsquelle. Dabei ist ein Sensor oder die Strahlungsquelle an einem Mehr-Achsen-Schwenkarm-Roboter befestigt. Der Roboter wird während eines Messvorgangs um nur genau eine seiner Achsen verschwenkt.

Das Dokument WEISSHAAR JÜRGEN P.: "LIGHT & ENGINEERING", [Online], Bd. 23, Nr. 4, 1. Januar 2015 (2015-01-01), Seiten 75-80, XP093172236, beschreibt eine gonioradiometrische Messung unter Verwendung eines 6-Achsen Schwenkarm-Roboters.

Das Dokument ANONYM: "Brandmeldeanlagen - Teil 23: Feueralarmeinrichtungen. Optische Signalgeber; Deutsche Fassung EN 54-23: 2010", DEUTSCHE NORM DIN EN 54-23, 1. Juni 2010 (2010-06-01), Seiten 1-69, XP055764119, ist eine DIN-Norm betreffend optische Signalgeber.

Der Internationale Standard BS ISO 9787:2013: "Robots and robotic devices - Coordinate systems and motion nomenclatures", 1. Januar 2013 (2013-01-01), XP093175055, definiert Koordinatensysteme von Mehr-Achsen-Robotern.

Der vorliegenden Erfindung die Aufgabe zugrunde, ein Gonioradiometer zur richtungsabhängigen Messung mindestens einer lichttechnischen oder radiometrischen Kenngröße einer optischen Strahlungsquelle bereitzustellen, das eine gonioradiometrische Messung auch an Modulen, die eine oder mehrere optische Strahlungsquellen enthalten, ermöglichen, ohne allerdings hierauf beschränkt zu sein. Des Weiteren soll ein entsprechendes Verfahren zur richtungsabhängigen Messung solcher Kenngrößen einer optischen Strahlungsquelle bereitgestellt werden.

Diese Aufgabe wird erfindungsgemäß durch ein Gonioradiometer mit den Merkmalen des Patentanspruchs 1 und ein Verfahren mit den Merkmalen des Patentanspruchs 13 gelöst. Ausgestaltungen der Erfindung sind in den abhängigen Ansprüchen angegeben.

Danach betrifft die vorliegende Erfindung in einem ersten Erfindungsaspekt ein Gonioradiometer zur richtungsabhängigen Messung mindestens einer lichttechnischen oder radiometrischen Kenngröße einer optischen Strahlungsquelle, welches mindestens einen Sensor aufweist, der geeignet ist, die Strahlung der Strahlungsquelle zu messen, und eine Vorrichtung zum Bewegen der Strahlungsquelle aufweist, wobei die Vorrichtung derart bewegbar ist, dass der Sensor Messwerte aufnimmt, die die lichttechnische oder radiometrische Kenngröße auf einer Kugeloberfläche um den Strahlungsschwerpunkt der Strahlungsquelle angeben.

Dabei ist vorgesehen, dass die Ausstrahlungsrichtung der lichttechnischen Kenngröße unter Verwendung eines Ebenensystems, dessen Ebenen sich in einer Schnittgeraden schneiden, die durch den Strahlungsschwerpunkt der Strahlungsquelle geht, und unter Verwendung eines Abstrahlwinkels, der die Abstrahlrichtung innerhalb einer betrachteten Ebene angibt, beschrieben wird, und jedem Messwert der lichttechnischen oder radiometrischen Kenngröße eine bestimmte Ebene des Ebenensystems und ein bestimmter Abstrahlwinkel innerhalb dieser Ebene zugeordnet ist.

Es ist weiter vorgesehen, dass die Vorrichtung zum Bewegen der Strahlungsquelle einen Arbeitstisch mit einer Drehachse umfasst, auf dem die Strahlungsquelle befestigt werden kann, wobei die Vorrichtung dazu vorgesehen und ausgebildet ist,
- den Arbeitstisch zur Einstellung unterschiedlicher Abstrahlwinkel α auf einer Kreistrajektorie zu bewegen, in deren Mittelpunkt der Strahlungsschwerpunkt liegt,
- den Arbeitstisch zur Einstellung verschiedener Ebenen des Ebenensystems A um die Drehachse zu drehen,
- wobei sowohl bei einer Bewegung auf der Kreistrajektorie als auch bei einer Drehung um die Drehachse des Arbeitstischs der Strahlungsschwerpunkt der auf dem Arbeitstisch befestigten Strahlungsquelle ortsfest ist.

Die erfindungsgemäße Lösung beruht auf dem Gedanken, eine der beiden bei einer gonioradiometrischen Messung vorzunehmenden Rotationen der Strahlungsquelle durch eine Kreisbewegung zu ersetzen, bei der ein Arbeitstisch, auf dem die Strahlungsquelle befestigt ist, tangential entlang einer Kreistrajektorie geführt wird, wobei der Strahlungsschwerpunkt im Mittelpunkt der Kreistrajektorie liegt. Beispielsweise wird eine Drehung um eine raumfeste horizontale Achse, die der Einstellung eines Abstrahlwinkels α dient, durch die Bewegung des Arbeitstischs, auf dem sich die Strahlungsquelle befindet, entlang einer Kreistrajektorie ersetzt. Der Radius des Kreises der Kreistrajektorie bestimmt dabei die maximale vertikale Größe des Messobjekts, d. h. der Radius entspricht der Entfernung zwischen der Auflagefläche des Arbeitstisches und dem Strahlungsschwerpunkt bzw. dem Lichtaustrittszentrum der Strahlungsquelle.

Die Realisierung einer Rotation der Strahlungsquelle um eine Achse durch Verfahren des Arbeitstisches, auf dem die Strahlungsquelle angeordnet ist, entlang einer Kreistrajektorie, ist mit dem Vorteil verbunden, dass der Arbeitstisch, der die Strahlungsquelle hält, nicht um zwei physisch vorhandene Achsen rotiert werden muss. Es ist lediglich erforderlich, eine vergleichsweise einfache Rotation um eine Achse (zur Messung unterschiedlicher Ebenen des Ebenensystems A) durchführen zu können. Damit wird die Komplexität der Vorrichtung, die die Strahlungsquelle hält, reduziert.

Ein weiterer, mit der erfindungsgemäßen Lösung verbundener Vorteil besteht darin, dass durch Bewegen des Arbeitstisches tangential entlang einer Kreistrajektorie ein ausreichender Arbeitsraum zur Handhabung und Rotation der Strahlungsquelle oder eines Moduls, das die Strahlungsquelle enthält, bereitgestellt wird. Denn bei Bewegen des Arbeitstisches entlang einer Kreistrajektorie befindet sich die Kinemathek, die für eine solche Bewegung des Arbeitstisches erforderlich ist, unterhalb bzw. außerhalb der Kreistrajektorie, während der Strahlungsmittelpunkt der Strahlungsquelle ortsfest im Mittelpunkt der Kreistrajektorie liegt. Das Messobjekt kann daher beispielsweise durch eine Bedienperson auch bei großen Abmessungen gehandhabt und insbesondere auf dem Arbeitstisch befestigt bzw. von diesem gelöst werden. Es wird auf und oberhalb des Arbeitstisches ein ausreichender Handhabungsbereich bereitgestellt, der es ermöglicht, auch große und schwere Teile auf dem Arbeitstisch anzuordnen und zu vermessen.

Ein Vorteil der erfindungsgemäßen Lösung besteht auch darin, dass durch Anordnung der Strahlungsquelle auf einem Arbeitstisch auch große Module befestigt und gonioradiometrisch vermessen werden können, indem der Arbeitstisch entsprechend groß und robust ausgeführt wird.

Es wird darauf hingewiesen, dass die Oberfläche bzw. Arbeitsfläche des Arbeitstisches während der Bewegung des Arbeitstisches entlang der Kreistrajektorie derart gekippt wird, dass die Oberfläche des Arbeitstisches tangential zur Kreisbahn verläuft.

Weiter wird darauf hingewiesen, dass der Arbeitstisch gemäß einem Ausführungsbeispiel über einen Winkelbereich von maximal 200° auf der Kreistrajektorie bewegt wird, wobei der Winkelbereich sich zwischen -100° und +100° erstreckt, wenn der Winkel von 0° einer parallelen Ausrichtung des Arbeitstisches zum Boden (also dem niedrigsten Punkt der Kreistrajektorie) entspricht.

Eine Ausgestaltung der Erfindung sieht vor, dass die Vorrichtung dazu vorgesehen und ausgebildet ist, den Arbeitstisch während eines Messvorgangs um die Drehachse des Arbeitstisches zu drehen, wobei während des Messvorgangs Messwerte erfasst werden, die unterschiedlichen Ebenen des Ebenensystems A für den jeweils eingestellten Abstrahlwinkel α entsprechen. Nach einer solchen Messung verfährt der Arbeitstisch in eine andere Position entlang der Kreistrajektorie und stellt damit einen anderen Abstrahlwinkel α ein. Anschließend erfolgt für diesen Abstrahlwinkel durch Drehung des Arbeitstisches um die Drehachse die Aufnahme von Messwerten, die unterschiedlichen Ebenen des Ebenensystem A für den dann eingestellten Abstrahlwinkel α entsprechen. Dies wird inkrementell fortgeführt, bis Messungen für alle zu messenden Abstrahlwinkel α vorgenommen worden sind.

Eine alternative Ausgestaltung sieht vor, dass die Vorrichtung dazu vorgesehen und ausgebildet ist, den Arbeitstisch während eines Messvorgangs auf der Kreistrajektorie zu bewegen, wobei während des Messvorgangs Messwerte erfasst werden, die unterschiedlichen Abstrahlwinkeln α innerhalb der jeweils eingestellten Ebene des Ebenensystems A entsprechen. In diesem Fall stellt der Arbeitstisch nach einer solchen Messung durch Drehung um seine Drehachse eine andere Ebene des Ebenensystems ein. Anschließend erfolgt für diese Ebene durch Bewegung des Arbeitstisches entlang der Kreistrajektorie die Erfassung von Messwerten, die unterschiedlichen Abstrahlwinkeln α innerhalb der dann eingestellten Ebene des Ebenensystems A entsprechen. Dies wird inkrementell fortgeführt, bis Messungen für alle zu messenden Ebenen des Ebenensystems vorgenommen worden sind.

Aus den vorgenannten Ausführungen ergibt sich, dass ein Messvorgang im Sinne der vorliegenden Erfindung ein Vorgang ist, bei dem ein Sensor entweder Messwerte aufnimmt, die sich bei einer eingestellten Ebene des Ebenensystems bei Bewegung des Arbeitstisches entlang der Kreistrajektorie ergeben, oder Messwerte aufnimmt, die sich bei einem eingestellten Abstrahlwinkel α bei Rotation um die Drehachse des Arbeitstisches ergeben.

Eine Ausgestaltung der Erfindung sieht vor, dass die Drehachse des Drehtisches senkrecht zur Oberfläche des Drehtisches verläuft. Die Strahlungsquelle wird somit um eine Achse gedreht, die senkrecht auf der Oberfläche des Drehtisches steht. Die Strahlungsquelle ist dabei bevorzugt derart auf dem Arbeitstisch befestigt, dass sich der Strahlungsschwerpunkt der Strahlungsquelle auf dieser Achse befindet. Damit ändert sich die Position des Strahlungsschwerpunkt bei Drehen der Strahlungsquelle nicht. Sofern sich der Strahlungsschwerpunkt der Strahlungsquelle nicht von vornherein auf der Drehachse des Arbeitstisches befindet, ist erforderlich, die Strahlungsquelle nach ihrer Befestigung auf dem Arbeitstisch in der Ebene des Arbeitstisches derart zu verfahren, dass sich der Strahlungsschwerpunkt auf der Drehachse befindet.

Die Vorrichtung zum Bewegen der Strahlungsquelle kann grundsätzlich in vielfältiger Weise ausgebildet sein. Die Vorrichtung muss dabei zum einen den Arbeitstisch um die Drehachse des Arbeitstisches drehen und zum anderen den Arbeitstisch entlang einer Kreistrajektorie führen können. Die Erfindung sieht vor, eine solche Bewegung unter Verwendung eines Roboters durchzuführen.

So ist erfindungsgemäß vorgesehen, dass die Vorrichtung zum Bewegen der Strahlungsquelle durch einen Roboter gebildet ist, der mindestens zwei Schwenkarme mit zugeordneten Schwenkachsen und mindestens einen translatorischen Freiheitsgrad aufweist, wobei die Drehachse des Arbeitstischs eine der Schwenkachsen des Roboters bildet. Die Bewegung des Arbeitstisches entlang einer Kreistrajektorie kann allgemein durch die Kombination einer linearen Bewegung, einer vertikalen Bewegung und einer Kippbewegung des Arbeitstisches realisiert werden (wobei die Kippbewegung des Arbeitstisches eine andere Bewegung ist als die Drehbewegung des Arbeitstisches um die Drehachse). Während der Kreisbewegung auf der Kreistrajektorie wird dabei der Arbeitstisch derart gekippt, dass die Normale der planen Arbeitsfläche des Arbeitstisches zum Kreismittelpunkt zeigt, d.h. die Arbeitsfläche des Arbeitstisches verläuft tangential zur Kreisbahn. Die lineare Bewegung und die vertikale Bewegung führen den Arbeitstisch auf der Kreistrajektorie.

Der translatorische Freiheitsgrad des Roboters dient dazu, die lineare Bewegung des Arbeitstisches zu realisieren. Die beiden Schwenkarme mit zugeordneten Schenkachsen des Roboters dienen dazu, die vertikale Bewegung des Arbeitstisches zu realisieren.

Bei dem Roboter handelt es sich beispielsweise um einen 4-Achsen-Schwenkarm-Roboter ist, der zusätzlich translatorisch bewegbar ist. Dabei sind die Schwenkarme des Roboters dazu ausgebildet, derart zueinander ausgerichtet zu werden, dass sie als Schwinge wirken und in Zusammenwirkung mit der translatorischen Bewegung die Kreistrajektorie des Arbeitstischs realisieren. Die translatorische Bewegung wird beispielsweise entlang einer auf dem Boden angeordneten Längsschiene ausgeführt.

In einem nicht die Erfindung betreffenden Beispiel ist die Vorrichtung zum Bewegen der Strahlungsquelle derart ausgestaltet, dass sie zwei Linearmechanismen und einen Kipp- und Drehmechanismus aufweist, wobei ein erster Linearmechanismus dazu vorgesehen und ausgebildet ist, die Arbeitsplatte horizontal zu verfahren, ein zweiter Linearmechanismus dazu vorgesehen und ausgebildet ist, die Arbeitsplatte vertikal zu verfahren (entlang einer Längsschiene) und der Kipp- und Drehmechanismus dazu vorgesehen und ausgebildet ist, die Arbeitsplatte derart zu verkippen, dass der Normalenvektor auf der Oberfläche bzw. Arbeitsfläche der Arbeitsplatte an jeder Position entlang der Kreistrajektorie auf den Kreismittelpunkt zeigt, und die Arbeitsplatte um die Drehachse zu drehen.

Eine Ausgestaltung der Erfindung sieht vor, dass die Vorrichtung zum Bewegen der Strahlungsquelle dazu ausgebildet ist, dass der Radius der Kreistrajektorie einstellbar ist. Insbesondere ist der Radius auf die Höhe des Messobjekts, dass die Strahlungsquelle umfasst, einstellbar, wobei das Messobjekt am Arbeitstisch befestigt wird und der Strahlungsschwerpunkt der Strahlungsquelle im Kreismittelpunkt der Kreistrajektorie, die der Arbeitstisch ausführt, liegt.

Der Radius der Kreistrajektorie liegt in Ausführungsbeispielen bei mindestens 10 cm, kann aber auch erheblich größer sein, beispielsweise bei bis zu 150 cm liegen. Weiter kann vorgesehen sein, dass der Mittelpunkt der Kreistrajektorie in einer Höhe im Bereich zwischen 130 cm und 180 cm über dem horizontalen Erdboden, auf dem das Gonioradiometer steht, liegt. Dies ermöglicht es, dass das Objekt durch eine Bedienperson einfach zu handhaben, wobei das Objekt sich etwa auf Brusthöhe der Bedienperson befindet.

Eine weitere Ausgestaltung der Erfindung sieht vor, dass die Vorrichtung zum Bewegen der Strahlungsquelle dazu vorgesehen und ausgebildet ist, den Arbeitstisch auf einer Kreistrajektorie zu bewegen, die um eine raumfeste horizontale Achse verläuft. Das Gonioradiometer realisiert dabei ein Gonioradiometer vom Typ 1.1. Dabei kann weiter vorgesehen sein, dass die Schnittgerade des Ebenensystems A eine Achse bildet, die durch den Mittelpunkt der Kreistrajektorie verläuft.

Eine weitere Ausgestaltung der Erfindung sieht vor, dass die Vorrichtung zum Bewegen der Strahlungsquelle während eines Messvorgangs, bei dem der Arbeitstisch um die Drehachse gedreht oder der Arbeitstisch auf der Kreistrajektorie bewegt wird, eine kontinuierliche Bewegung ausführt, wobei der Sensor dazu eingerichtet ist, während der kontinuierlichen Bewegung fortlaufend Messwerte aufzunehmen. Eine solche kontinuierliche Bewegung wird auch als Scan-Bewegung oder Scan-Vorgang bezeichnet. Die kontinuierliche Aufnahme von Messwerten während eines Scan-Vorgangs stellt eine effektive Betriebsart zur Aufnahme von Messwerten dar. Dabei wird darauf hingewiesen, dass die Anzahl der während eines Scan-Vorgangs aufgenommenen Messwerte naturgemäß endlich ist. Beispielsweise kann vorgesehen sein, dass für jedes hundertste Grad einer Schwenkbewegung ein Messwert aufgenommen wird. Je feiner die Auflösung, desto größer die Anzahl der Messwerte.

Eine weitere Ausgestaltung der Erfindung sieht vor, dass der Sensor im Fernfeld der Strahlungsquelle angeordnet ist, d. h. in einer Entfernung, in der die Strahlungsquelle näherungsweise als Punktlichtquelle betrachtet werden kann. Beispielsweise ist der Sensor in einem Abstand im Bereich zwischen 3 m und 50 m vom Strahlungsschwerpunkt entfernt. Dabei wird darauf hingewiesen, dass die Anordnung des Sensors im Fernfeld der Strahlungsquelle lediglich ein Ausführungsbeispiel darstellt. Grundsätzlich kann der Sensor auch im Nahfeld angeordnet sein.

Als lichttechnische oder radiometrische Kenngröße werden beispielsweise die Lichtstärkeverteilung, die Farbverteilung und/oder spektroradiometrische Informationen auf einer Kugeloberfläche um die Strahlungsquelle gemessen.

In einem weiteren Erfindungsaspekt betrifft die vorliegende Erfindung ein Verfahren zur richtungsabhängigen Messung mindestens einer lichttechnischen oder radiometrischen Kenngröße einer optischen Strahlungsquelle, wobei die Ausstrahlungsrichtung der lichttechnischen oder radiometrischen Kenngröße unter Verwendung eines Ebenensystems, dessen Ebenen sich in einer Schnittgeraden schneiden, die durch den Strahlungsschwerpunkt der Strahlungsquelle geht, und unter Verwendung eines Abstrahlwinkels, der die Abstrahlrichtung innerhalb einer betrachteten Ebene angibt, beschrieben wird. Jedem Messwert der lichttechnischen oder radiometrischen Kenngröße ist eine bestimmte Ebene des Ebenensystems und ein bestimmter Abstrahlwinkel innerhalb dieser Ebene zugeordnet. Die Messwerte werden mittels mindestens eines Sensors erfasst, der geeignet ist, die Strahlung der Strahlungsquelle zu messen, Dabei wird die Strahlungsquelle bei einem Messvorgang derart bewegt wird, dass der Sensor Messwerte aufnimmt, die die lichttechnische oder radiometrischen Kenngröße auf einer Kugeloberfläche um den Strahlungsschwerpunkt der Strahlungsquelle angeben.

Es ist vorgesehen, dass die Strahlungsquelle auf einem Arbeitstisch mit einer Drehachse angeordnet ist und der Arbeitstisch
- zur Einstellung unterschiedlicher Abstrahlwinkel α tangential auf einer Kreistrajektorie bewegt wird, in deren Mittelpunkt der Strahlungsschwerpunkt liegt,
- zur Einstellung verschiedener Ebenen des Ebenensystems A um die Drehachse gedreht wird,
- wobei sowohl bei einer Bewegung auf der Kreistrajektorie als auch bei einer Drehung um die Drehachse des Arbeitstischs der Strahlungsschwerpunkt der auf dem Arbeitstisch befestigten Strahlungsquelle ortsfest ist.

Das erfindungsgemäße Verfahren sieht weiter vor, dass die Strahlungsquelle durch einen Roboter auf der Kreistrajektorie und um die Drehachse bewegt wird, der mindestens zwei Schwenkarme und mindestens einen translatorischen Freiheitsgrad aufweist, wobei die Drehachse des Arbeitstischs eine der Schwenkachsen des Roboters bildet. Weiter ist vorgesehen, dass die Schwenkarme des Roboters derart zueinander ausgerichtet werden, dass sie als Schwinge wirken und in Zusammenwirkung mit der translatorischen Bewegung die Kreistrajektorie des Arbeitstischs realisieren.

Im Hinblick auf die mit einem solchen Verfahren verbundenen Vorteile wird auf die Ausführungen zum erfindungsgemäßen Gonioradiometer verwiesen. Gleiches gilt für Ausführungsbeispiele des erfindungsgemäßen Verfahrens.

Die Erfindung wird nachfolgend unter Bezugnahme auf die Figuren der Zeichnung anhand mehrerer Ausführungsbeispiele näher erläutert. Es zeigen:
- Figur 1: ein Ausführungsbeispiel eines Gonioradiometers, das einen 4-Achsen-Schwenkarm-Roboter und einen Arbeitstisch mit einer Drehachse umfasst, auf dem eine Strahlungsquelle befestigt ist, wobei der Arbeitstisch durch den Roboter auf einer Kreistrajektorie bewegbar und um die Drehachse drehbar ist;
- Fig. 2-6: das Gonioradiometer der Figur 1, wobei der Arbeitstisch in verschiedenen Positionen auf der Kreistrajektorie und in verschiedenen Drehstellungen dargestellt ist;
- Figur 7: das Gonioradiometer der Figur 1, wobei die auf dem Arbeitstisch befestigten Strahlungsquelle in Form eines Scheinwerfermoduls ausgebildet ist;
- Fig. 8-11: das Gonioradiometer der Figur 7, wobei der Arbeitstisch in verschiedenen Positionen auf der Kreistrajektorie und in verschiedenen Drehstellungen dargestellt ist;
- Figur 12: ein nicht die Erfindung betreffendes Beispiel eines Gonioradiometers mit einem Arbeitstisch, der durch eine Vorrichtung auf einer Kreistrajektorie bewegbar und um eine Drehachse drehbar ist, wobei die Vorrichtung einen horizontalen und einen vertikalen Linearmechanismus und einen Kipp- und Drehmechanismus umfasst;
- Fig. 13-17: das Gonioradiometer der Figur 12, wobei der Arbeitstisch in verschiedenen Positionen auf der Kreistrajektorie und in verschiedenen Drehstellungen dargestellt ist;
- Figur 18: die Darstellung eines Kugelkoordinatensystems mit einer im Koordinatenursprung angeordneten Strahlungsquelle;
- Figur 19: schematisch ein Gonioradiometer vom Typ 1.1 mit räumlich fester horizontaler und räumlich bewegbarer vertikaler Achse für die Messung von A-Ebenen und B-Ebenen; und
- Figur 20: schematisch das Radiometer der Figur 19 in einem Kugelkoordinatensystem unter zusätzlicher Darstellung einer Projektionswand zur Illustration der bei einer Drehung der Lichtquelle um zwei Achsen auftretenden Änderungen im Hinblick auf die Ebene des verwendeten Ebenensystems und im Hinblick auf den Abstrahlwinkel.

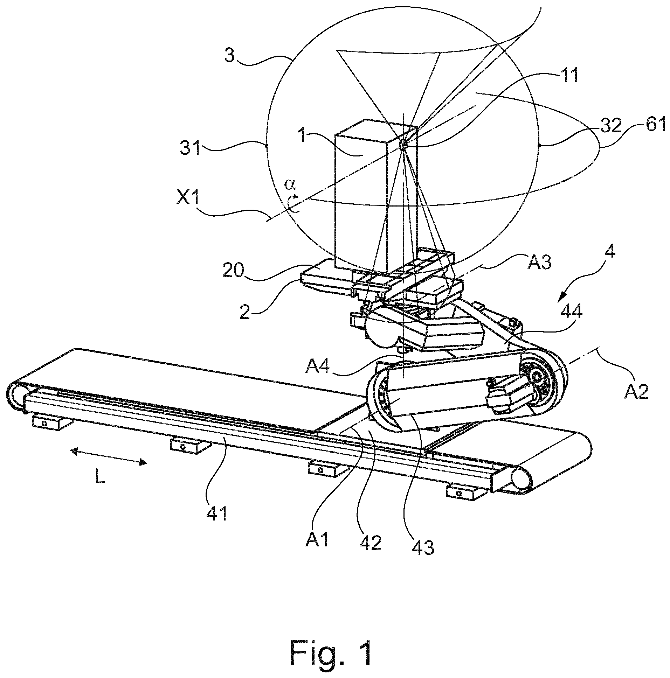

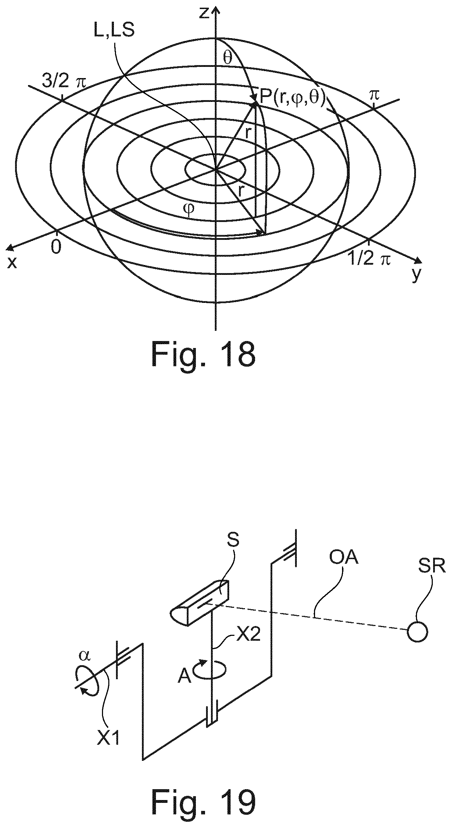

Bevor die Erfindung anhand der Figuren 1 bis 11 an Ausführungsbeispielen näher erläutert wird, wird zunächst zum besseren Verständnis der Erfindung anhand der Figuren 18 bis 20 der Hintergrund der Erfindung erläutert.

Die Figur 18 stellt ein Kugel-Koordinatensystem unter Darstellung der Definition der Winkel Phi φ und Theta θ dar. Befindet sich eine Strahlungsquelle S oder deren Strahlungsschwerpunkt LS im Ursprung eines solchen Kugel-Koordinatensystems, so können lichttechnische oder radiometrische Kenngrößen der Strahlungsquelle goniometrisch, d. h. für alle Richtungen durch Bewegen der Strahlungsquelle oder durch Bewegen eines Sensors nacheinander in den Winkelbereichen - 180 ° ≤ φ ≤ 180° und 0 ≤ θ ≤ 180 ° gemessen werden. Durch zwei Winkel φ, θ kann somit eine Ausstrahlungsrichtung definiert werden.

Es ist üblich, die Lichtstärkeverteilung oder eine andere richtungsabhängige lichttechnische oder radiometrische Kenngröße unter Verwendung bestimmter Ebenensysteme zu beschreiben, die als A-Ebenen, B-Ebenen und C-Ebenen bezeichnet werden und in der bereits erwähnten Dokument CIE No 70 (1987) erläutert sind. Jedes Ebenensystem definiert zwei Achsen, die sich im Lichtschwerpunkt der Lichtquelle schneiden. Eine erste Achse ist durch eine Schnittgerade gegeben, in der sich alle Ebenen des Ebenensystems schneiden. Die zweite Achse ist durch die Orientierung der Lampe in der Strahlungsquelle gegeben.

Bei A-Ebenen werden die einzelnen Ebenen mit Winkeln A_{X} mit - 180° ≤ X ≤ 180° gekennzeichnet. Innerhalb einer A-Ebene werden Richtungen bzw. Abstrahlwinkel α durch Winkel α von - 90° ≤ α ≤ 90° angegeben.

Bei B-Ebenen werden die einzelnen Ebenen mit Winkeln B_{X} von - 180° ≤ X ≤ 180° gekennzeichnet. Innerhalb einer B-Ebene werden Richtungen durch Winkel β von - 90° ≤ β ≤ 90° angegeben.

Bei C-Ebenen werden die einzelnen Ebenen mit Winkeln C_{X} von 0° ≤ X ≤ 360° gekennzeichnet. Innerhalb einer C-Ebene werden Richtungen durch Winkel γ von 0 ≤ γ ≤ 180 ° angegeben.

Die Winkel φ und θ der Figur 18 sind die generalisierten Repräsentanten der Winkel im A-, B- oder C-System, z.B. A, α.

Die Figur 19 zeigt schematisch ein Gonioradiometer des Typs 1.1. Es sind schematisch eine Strahlungsquelle S mit einem lichtemittierenden Bereich und einer optischen Achse OA, ein Sensor SR und zwei Achsen X1, X2 dargestellt, um die die Strahlungsquelle S verschwenkbar ist. Eine der Achsen X1 ist räumlich feststehend, d.h. bei einem Verschwenken der Strahlungsquelle S um diese Achse X1 ändert sich deren räumliche Ausrichtung nicht. Die andere Achse X2 ist räumlich nicht feststehend, da sich bei einem Verschwenken um die feststehende Achse X1 die räumliche Ausrichtung der anderen Achse X2 notwendigerweise ändert.

Bei einem Goniometer des Typs 1.1 gemäß der Figur 19 liegt eine in ihrer räumlichen Position feststehende horizontale Achse X1 und eine in ihrer räumlichen Position bewegliche Achse X2 vor, die in der Darstellung der Figur 19 vertikal verläuft, jedoch ihre räumliche Position bei Verschwenken der Anordnung um die horizontale Achse ändert. Es erfolgt eine Messung von A-Ebenen oder B-Ebenen.

Ein zur Messung von A-Ebenen zum Einsatz kommendes Gonioradiometer vom Typ 1.1 realisiert somit eine in ihrer räumlichen Position feststehende, horizontale Achse X1. Für den Fall, dass die Anordnung mit der Strahlungsquelle um die feststehende, horizontale Achse X1 bewegt bzw. gescannt wird, werden A-Ebenen aufgenommen, wobei der Abstrahlwinkel α variiert wird. Für den Fall dagegen, dass sich bei einem Messvorgang die bewegte, vertikale Achse X2 bei festem α bewegt, wird der Parameter A_{X} variiert, so dass der feststehende Sensor auf einer Kugeloberfläche auf "Breitenkreisen" läuft. Letztere Betriebsart wird typischerweise für die Charakterisierung von Automobil-Scheinwerfern benutzt, weil die bewegten Massen bei einer Drehung um die Achse X2 kleiner sind als bei einer Drehung um die Achse X1.

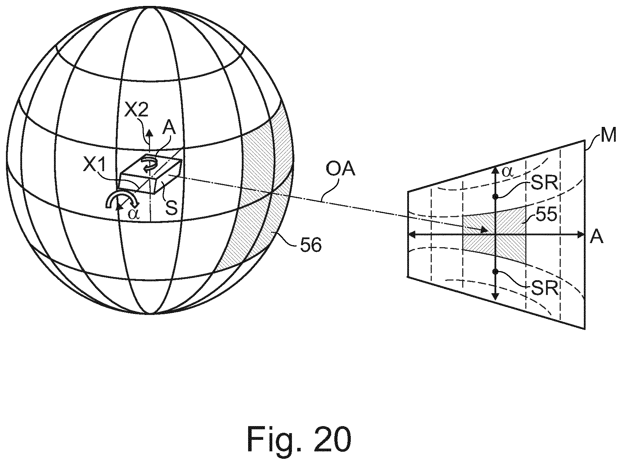

Diese Zusammenhänge sind weitergehend in der Figur 20 illustriert. Die Figur 20 zeigt die Strahlungsquelle S und deren optische Achse OA, die beiden senkrecht zueinander angeordneten Achsen X1, X2, um die die Strahlungsquelle S drehbar ist, und eine Messwand M, wobei auf der Messwand M schematisch einzelne Wandteile 55 dargestellt sind, die einzelnen Raumwinkel-Elementen bzw. Raumwinkelbereichen 56 eines Kugelkoordinatensystems mit der Strahlungsquelle S im Koordinatenursprung entsprechen. Dabei verläuft die Achse X1 horizontal und die Achse X2 vertikal. Die Messwand M kann eine gedachte Ebene oder eine reale Messwand oder Projektionswand sein.

Die Figur 20 verdeutlicht, dass bei einer Drehung um die Achse X1 der Winkel α geändert wird, was auf der Messwand M zu einer Variation des vertikalen Winkels führt, d. h. eine Drehung um die horizontale Achse X1 verändert auf der Messwand den vertikalen Winkel.

Über die Änderung des Winkels α können somit unterschiedliche Breitenkreise ausgewählt werden.

Bei einer Drehung um die Achse X2 werden Ebenen des Ebenensystems A durchlaufen bzw. eine Vielzahl solcher Ebenen für einen festen Winkel α gemessen. Dabei wird auf der Messwand ein "Breitenkreis" abgefahren.

Ein Messvorgang bzw. Scan kann grundsätzlich erfolgen, indem für einen Winkel α verschiedene Ebenen A (Drehung um Achse X2) gemessen werden, und eine solche Messung für eine Vielzahl von Winkeln α erfolgt wird, oder indem für eine bestimmte A-Ebene der Abstrahlwinkel α variiert wird (Drehung um Achse X1), und eine solche Messung für eine Vielzahl von A-Ebenen erfolgt.

In Figur 20 sind auch zwei Sensoren SR in der Messwand M dargestellt, die in einer vertikalen Ebene verlaufen und deren Position vertikal beabstandet ist. Dies ist lediglich beispielhaft zu verstehen. Grundsätzlich kann eine Messung mit nur einem Sensor erfolgen. Auch können mehr als zwei Sensoren vorgesehen sein. Es können verschiedene Sensor-Messanordnungen vorgesehen sein, wie sie beispielsweise in der WO 2016/116300 A1 beschrieben sind.

Es wird darauf hingewiesen, dass ein Sensor im Sinne der vorliegenden Erfindung jeder Sensor ist, der optische Strahlung, d. h. ultraviolette Strahlung, Strahlung des sichtbaren Lichtes oder Infrarotstrahlung innerhalb des Wellenlängenfensters von beispielsweise 100 nm (UV-C) bis 1 mm (IR-C) messen kann. Ein Sensor im Sinne der vorliegenden Erfindung kann also eine Wellenlänge oder einen Wellenlängenbereich erfassen.

Nachfolgend werden Ausführungsbeispiele der Erfindung beschrieben. Die Erfindung sieht vor, die Drehung um die horizontale Achse X1 in den Figuren 19 und 20 zu ersetzen durch die Bewegung eines Arbeitstisches, auf dem die Strahlungsquelle angeordnet ist, auf einer Kreisbahn bzw. Kreistrajektorie. Die Oberfläche des Arbeitstisches verläuft dabei tangential zur Kreisbahn. Die raumfeste horizontale Achse X1 bildet den Mittelpunkt der Kreisbahn bzw. Kreistrajektorie. Dabei ist der Strahlungsschwerpunkt der Strahlungsquelle im Mittelpunkt der Kreisbahn angeordnet.

Die Figur 1 zeigt ein erstes Ausführungsbeispiel eines derartigen Gonioradiometers. Das Gonioradiometer umfasst einen Arbeitstisch 2 und einen 4-Achsen-Schwenkarm-Roboter 4 zur geeigneten Bewegung des Arbeitstisches 2.

Der Arbeitstisch 2 umfasst eine flache Oberfläche bzw. Auflagefläche/Arbeitsfläche 20, auf der eine zu messende Strahlungsquelle 1 angeordnet ist. Die Strahlungsquelle 1 ist in der Figur 1 schematisch dargestellt. Sie umfasst einen Strahlungsschwerpunkt 11. Der Arbeitstisch 2 ist mittels des Roboters 4 entlang einer Kreistrajektorie 3 verfahrbar, wobei nur die unteren 180° der Kreistrajektorie zwischen den Punkten 31 und 32 zur Erfassung der Kugeloberfläche durchfahren werden müssen (d.h. der Winkelbereich zwischen -90° und +90°, wenn der Winkel von 0° lotrecht zum Boden zeigt). Dabei kann vorgesehen sein, dass der Arbeitstisch 2 über einen Winkelbereich größer als 180° verfahren wird, beispielsweise über einen Winkelbereich von 200° (zwischen 100° und -100°).

Die Kreistrajektorie 3 zeichnet sich dadurch aus, dass der Strahlungsschwerpunkt 11 sich im Mittelpunkt der Kreistrajektorie 3 befindet. Dies gilt für sämtliche Positionen des Arbeitstisches 2. Die Oberfläche 20 des Arbeitstisches 2 wird beim Verfahren des Arbeitstisches 2 entlang der Kreistrajektorie 3 derart gekippt, dass sie stets tangential an dem Kreisbogen anliegt. Dieser Aussage entspricht die Aussage, dass die Flächennormale der Oberfläche 20 in jeder Position des Arbeitstisches 2 auf den Kreismittelpunkt zeigt.

Weiter wird darauf hingewiesen, dass der Mittelpunkt der Kreistrajektorie 3 durch eine feststehende, horizontale Achse X1 verläuft, die der Drehachse X1 der Figur 19 entspricht. Die Kreistrajektorie 3 verläuft symmetrisch zu dieser Drehachse X1, d. h. sie verläuft in einer Ebene, die durch die Drehachse X1 senkrecht geschnitten wird.

Der Arbeitstisch 2 umfasst somit eine Kippachse, die es ermöglicht, dass die Oberfläche 20 des Arbeitstisches 2 bei dessen Bewegung entlang der Kreistrajektorie 3 stets tangential zur Kreistrajektorie 3 orientiert ist. Der Arbeitstisch umfasst des Weiteren eine Drehachse, die senkrecht auf der Oberfläche 20 des Arbeitstisches 2 steht. Die Drehachse zeigt dabei auf den Strahlungsschwerpunkt 11 der Strahlungsquelle 1 bzw. verläuft durch diesen Strahlungsschwerpunkt 11.

Die Kippachse und die Drehachse des Arbeitstisches 2 werden durch entsprechende Achsen des 4-Achsen-Schwenkarm-Roboters 4 bereit gestellt. Dabei dient der Roboter 4 der Bewegung des Arbeitstisches 2 um diese beiden Achsen sowie entlang der Kreistrajektorie.

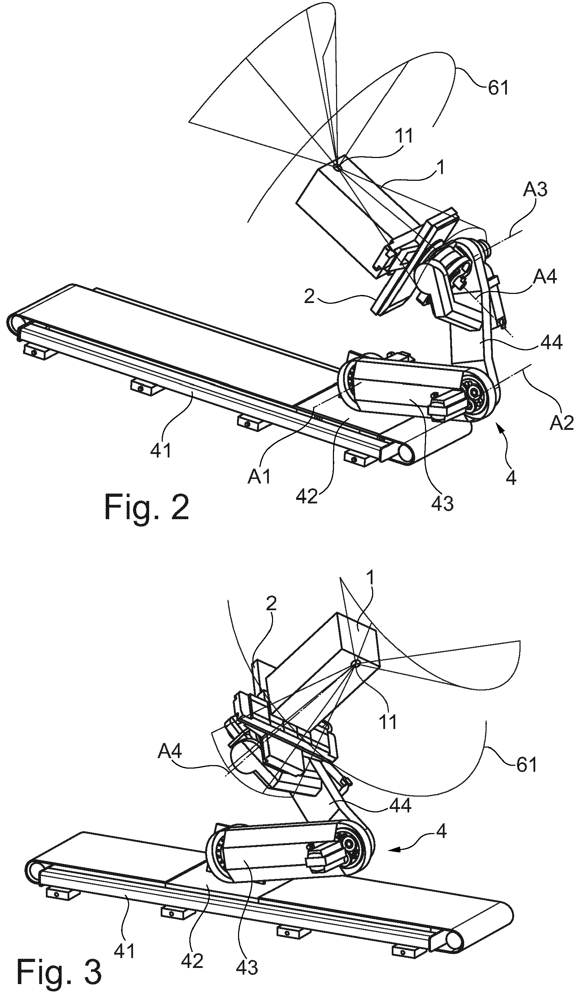

Der Roboter 4 umfasst eine Längsschiene 41, einen Schlitten 42, der entlang der Längsschiene 41 in Längsrichtung L verfahrbar ist und zwei Schwenkarme 43, 44. Der 2Roboter 4 realisiert dabei insgesamt 4 Drehachsen. Eine erste Drehachse A1 ist zwischen dem Schlitten 42 und dem einen Schwenkarm 43 ausgebildet. Eine zweite Drehachse A2 ist zwischen den beiden Schwenkarmen 43, 44 ausgebildet. Eine dritte Schwenkachse, die in der Figur 1 nur angedeutet, in der Figur 2 jedoch besser erkennbar ist, bildet die genannte Kippachse und erlaubt ein Verkippen des Arbeitstisches 2 auf der Kreistrajektorie 3. Eine vierte Schwenkachse A4 bildet die genannte Drehachse des Arbeitstisches 2 und erlaubt, den Arbeitstisch 2 zu rotieren.

Die beiden Schwenkarme 43, 44 des Roboters 4 bilden dabei eine Schwinge, die es ermöglicht, die Höhe des Arbeitstisches 2 einzustellen.

Die Anordnung der Figur 1 umfasst auch einen Sensor, der sich im Fernfeld der Strahlungsquelle 1 befinden kann und daher in der Figur 1 nicht dargestellt ist. Der Sensor kann dabei grundsätzlich an einem beliebigen Punkt im Raum angeordnet sein. Beispielsweise befindet sich der Sensor in gleicher Höhe wie die Strahlungsquelle in einer Entfernung zwischen 3 m und 50 m von der Strahlungsquelle. Auch können mehrere Sensoren, die beispielsweise horizontal entlang des Horizonts oder entlang einer vertikalen Linie angeordnet sind, vorgesehen sein.

Bei einer gonioradiometrischen Messung wird durch eine Bewegung des Arbeitstisches 2 entlang der Kreistrajektorie 3 der Abstrahlwinkel α, der die Abstrahlrichtung innerhalb einer betrachteten Ebene angibt, verändert. Bei Drehung des Arbeitstisches 2 um die Drehachse A4 werden verschiedene Ebenen des Ebenensystems A der gonioradiometrischen Messung eingestellt. Eine solche Drehung des Arbeitstisches 2 und damit der Strahlungsquelle 1 ist durch die Linie 61 der Figur 1 angedeutet. Das Gonioradiometer der Figur 1 stellt dabei ein Gonioradiometer vom Typ 1.1 dar, wobei die Bewegung des Arbeitstisches 2 entlang der Kreistrajektorie 3 die herkömmliche Rotation um die horizontale Achse X1 ersetzt.

Dies wird nachfolgend anhand der Figuren 2-6 weitergehend erläutert, die den Arbeitstisch 2 und den Roboter 4 in unterschiedlichen Positionen zeigen.

Die Figur 2 zeigt den Arbeitstisch 2 und den Roboter 4 in einer Position, die bezogen auf die Figur 1 näher an dem Punkt 32 der Kreistrajektorie liegt. Zu erkennen ist, dass durch ein entsprechendes Aufklappen der Schwinge, die die beiden Schwenkarme 43, 44 bilden, der Arbeitstisch 2 gegenüber der Position der Figur 1 angehoben ist. Auch sind die Kippachse A3 und die Drehachse A4 gut zu erkennen. In der Figur 2 ist der Arbeitstisch 2 in eine Position verfahren, in der der Abstrahlwinkel α gegenüber dem Abstrahlwinkel der Figur 1 geändert wurde.

Mit diesem geänderten Abstrahlwinkel werden nun Messwerte aufgenommen, wenn der Arbeitstisch zur Messung unterschiedlicher Ebenen des Ebenensystems A um die Drehachse A4 gedreht wird. Eine solche Drehung ist wiederum durch den Kreisbogen 61 illustriert. Indem verschiedene Positionen auf der Kreistrajektorie 3 angefahren und in diesen Positionen jeweils durch Rotation um die Drehachse A4 unterschiedliche Ebenen des Ebenensystems in einem Messvorgang gemessen werden, kann eine gonioradiometrische Messung durchgeführt werden. Dabei gilt, dass sowohl bei der Bewegung des Arbeitstisches 2 auf der Kreistrajektorie 3 als auch bei der Drehung des Arbeitstisches 2 um die Drehachse A4 der Strahlungsschwerpunkt 11 ortsfest ist und sich nicht verändert.

Alternativ kann eine gonioradiometrischen Messung dadurch durchgeführt werden, dass während eines Messvorgangs der Drehtisch 2 über die gesamte Kreistrajektorie 3 verfahren wird, wobei unterschiedliche Abstrahlwinkel erfasst werden, und dies für unterschiedliche Drehpositionen der Arbeitsplatte 2 bzw. der Drehachse A4 wiederholt wird.

Es kann vorgesehen sein, dass während eines Messvorgangs (bei dem der Arbeitstisch um die Drehachse A4 gedreht oder der Arbeitstisch 2 entlang der Kreistrajektorie 3 der Figur 1 verfahren wird) die Bewegung des Arbeitstisches kontinuierlich erfolgt. Dabei nimmt der Sensor während der kontinuierlichen Bewegung fortlaufend Messwerte auf. Grundsätzlich ist es jedoch ebenfalls möglich, dass der Arbeitstisch während eines Messvorgangs jeweils in inkrementellen Schritten gedreht bzw. verfahren wird und dabei bei jedem inkrementellen Schritt zur Aufnahme eines Messwertes kurz zum Stillstand kommt.

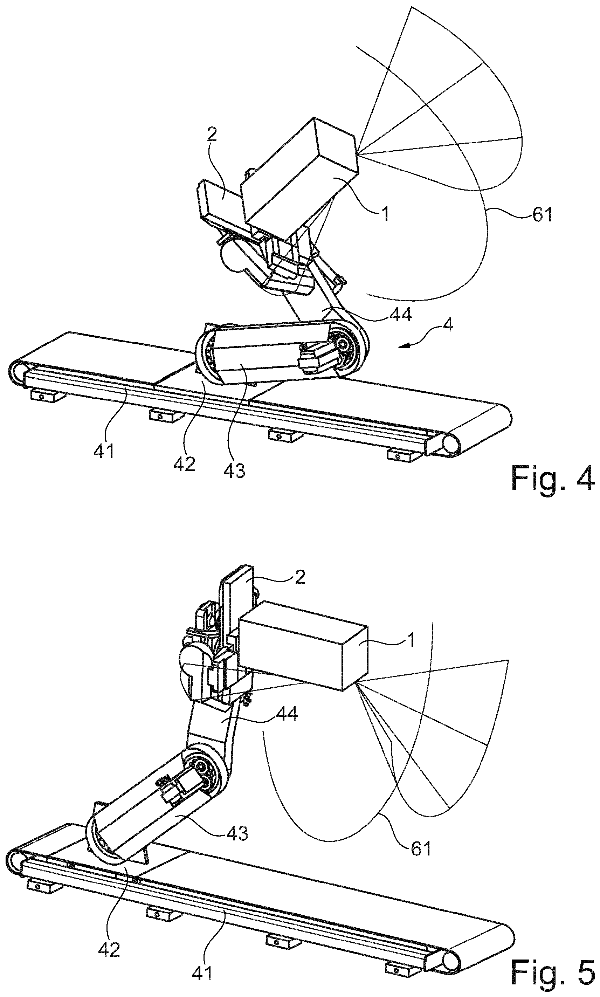

Die Figur 3 zeigt den Arbeitstisch 2 und den Roboter 4 in einer Position, die bezogen auf die Figur 1 näher an dem Punkt 31 der Kreistrajektorie 3 liegt. Die Figur 4 zeigt den Arbeitstisch 2 und den Roboter 4 grundsätzlich in der gleichen Position wie in der Figur 4, wobei jedoch die Strahlungsquelle 1 im Vergleich zu der Figur 3 um die Drehachse A4 rotiert worden ist.

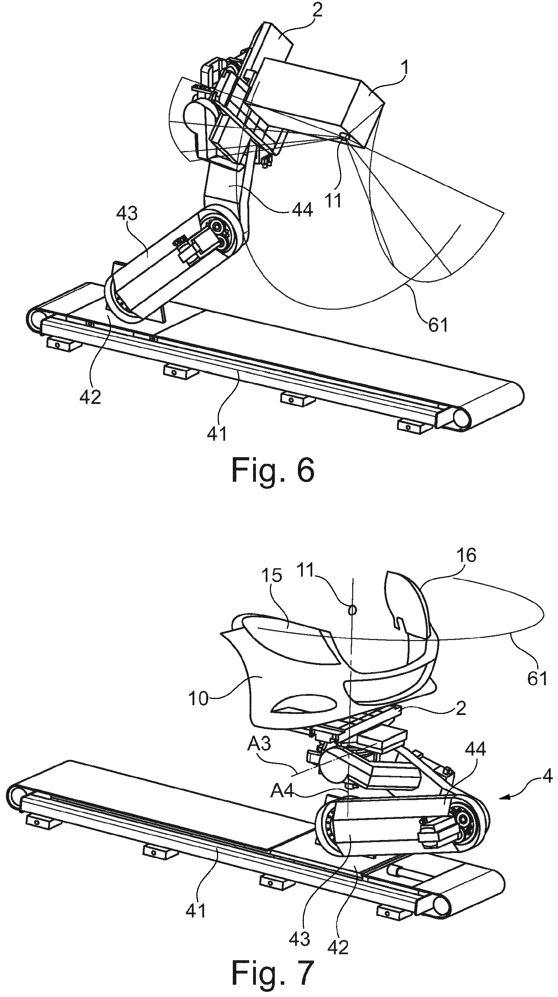

Die Figur 5 zeigt den Arbeitstisch 2 und den Roboter 4 in einer Position, die bezogen auf die Figur 1 am Punkt 31 der Kreistrajektorie 3 und damit an dem einen Ende der Kreistrajektorie liegt, die der Arbeitstisch 2 durchlaufen kann. In dieser Position ist die Schwinge maximal weit geöffnet. Das andere Ende der Kreistrajektorie ist durch den Punkt 32 der Figur 1 gegeben. Die Figur 6 zeigt den Arbeitstisch 2 und den Roboter 4 in einer ähnlichen Position wie in der Figur 5, wobei jedoch die Strahlungsquelle 1 im Vergleich zu der Figur 5 um die Drehachse A4 rotiert worden ist.

Es wird darauf hingewiesen, dass der Roboter 4 der Figuren 1-6 es ermöglicht, den Radius der Kreistrajektorie 3 zu verändern. So kann über den 4-Achsen-Schwenkarm-Roboter grundsätzlich eine beliebige Kreistrajektorie bzw. ein beliebiger Radius realisiert werden, der innerhalb der durch die Schwenkarme 43, 44 realisierbaren Abmessungen liegt. Beispielsweise beträgt der Radius der Kreistrajektorie mindestens 10 cm, wobei er jedoch auch deutlich größer sein kann. Der Radius der Kreistrajektorie 3 bestimmt dabei die maximale vertikale Größe des Prüflings bzw. der Strahlungsquelle 1, d.h. dieser Radius entspricht der Entfernung zwischen der Oberfläche 20 des Arbeitstisches 2 und dem Lichtaustrittszentrum bzw. dem Strahlungsschwerpunkt 11.

In den Figuren 1-6 ist die Strahlungsquelle 1 schematisch mit einem Strahlungsschwerpunkt 11 dargestellt. Der bei einer gonioradiometrischen Messung zu messende Prüfling kann sich in seiner Geometrie davon deutlich unterscheiden. Ein Beispiel hierzu zeigen die Figuren 7-11, bei denen eine Strahlungsquelle in Form eines Scheinwerfermoduls 10 ausgebildet ist, das räumlich voneinander entfernte Strahlungselemente 15, 16 aufweist. Im Fernfeld ergibt sich ein Strahlungsschwerpunkt 11, der zwischen den Strahlungselementen 15, 16 liegt.

Das Gonioradiometer der Figuren 1-11 erlaubt es, ein solches Scheinwerfermodul 10 oder ein anderes auszumessendes Modul in einfacher Weise an dem Arbeitstisch 2 zu befestigen. Dazu ist zu beachten, dass sich beispielsweise in der Position der Figuren 1 und 7 oberhalb des Arbeitstisches 2 keinerlei Bauteile befinden, so dass das Modul 10 unproblematisch auf dem Arbeitstisch 2 angeordnet werden kann. Der Arbeitstisch 2 befindet sich dabei etwa in Brusthöhe einer Bedienperson, so dass eine einfache Handhabbarkeit vorliegt. Dementsprechend liegt der Strahlungsschwerpunkt 11 bzw. der Mittelpunkt der Kreistrajektorie 3 (siehe Figur 1) in Ausführungsbeispielen im Bereich zwischen 30 cm und 180 cm über dem Erdboden. Das Scheinwerfermodul 10 wird dabei derart auf der Arbeitsplatte 2 befestigt, dass der Strahlungsschwerpunkt 11 im Mittelpunkt der Kreistrajektorie 3 liegt.

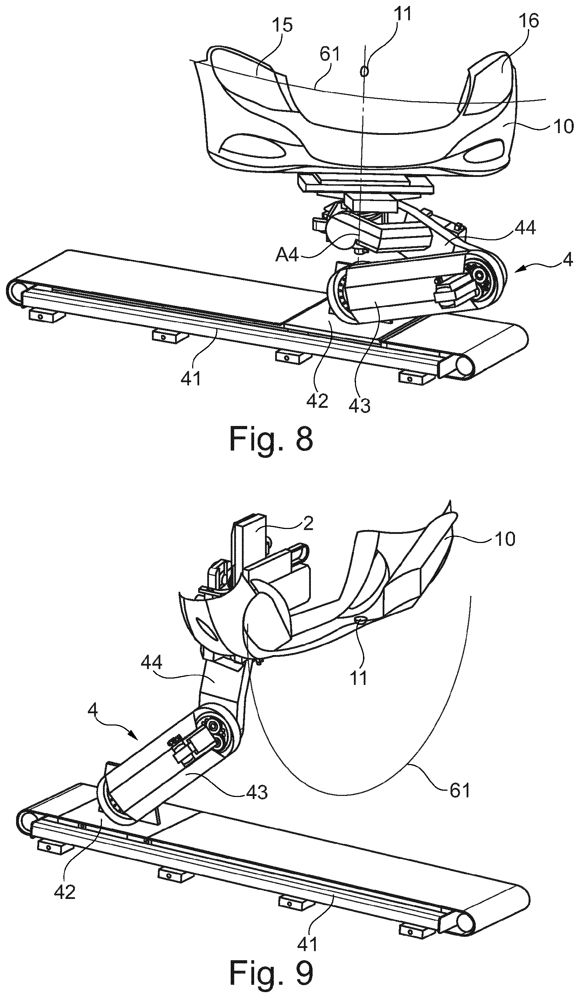

Die Figuren 7-11 zeigen verschiedene Positionen des Gonioradiometers entsprechend den Figuren 1-6, wobei der einzige Unterschied darin liegt, dass die Strahlungsquelle durch das Scheinwerfermodul 10 gebildet ist. Insofern wird auf die Beschreibung der Figuren 1-6 Bezug genommen. Die Figur 7 entspricht dabei bis auf die andere Strahlungsquelle 10 im Wesentlichen der Figur 1. Die Figur 8 zeigt den Arbeitstisch 2 und den Roboter 4 grundsätzlich in der gleichen Position wie in der Figur 7, wobei jedoch die Strahlungsquelle 1 im Vergleich zu der Figur 7 um die Drehachse A4 rotiert worden ist.

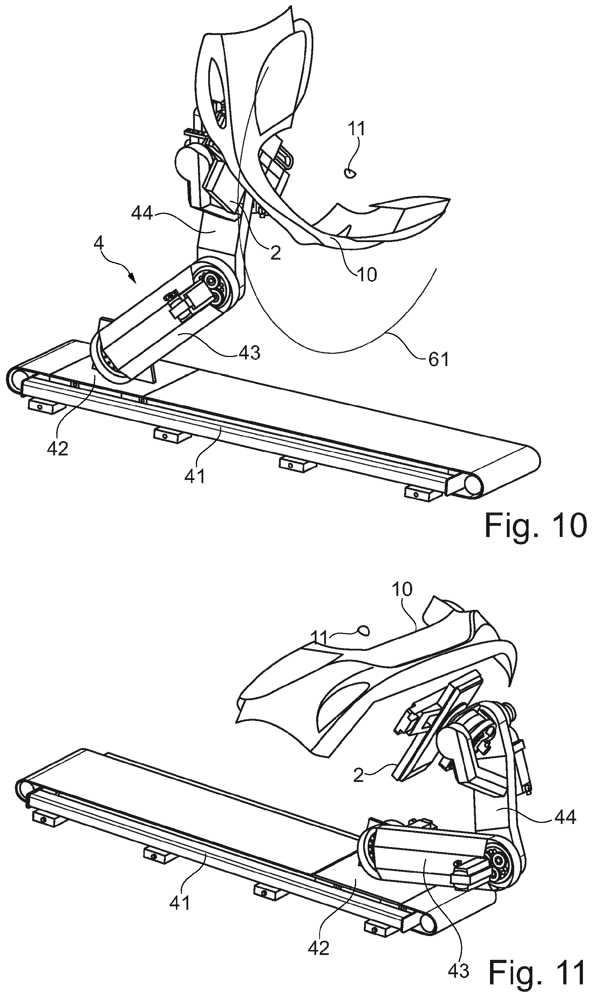

Die Figur 9 entspricht bis auf die andere Strahlungsquelle 10 im Wesentlichen der Figur 6. Die Figur 10 zeigt den Arbeitstisch 2 und den Roboter 4 grundsätzlich in der gleichen Position wie in der Figur 9, wobei jedoch die Strahlungsquelle 1 im Vergleich zu der Figur 9 um die Drehachse A4 rotiert worden ist.

Die Figur 11 entspricht bis auf die andere Strahlungsquelle 10 im Wesentlichen der Figur 2.

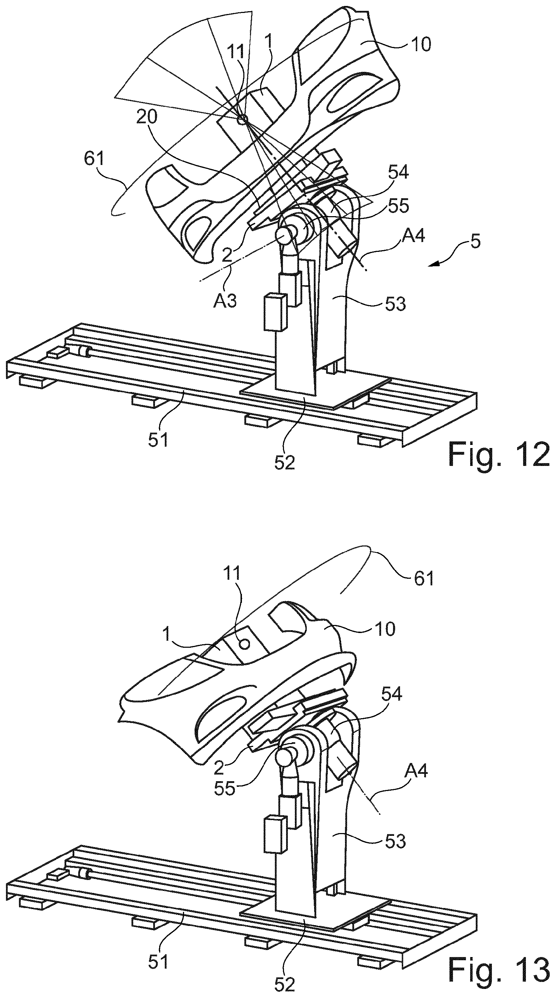

In den Figuren 1-11 wird die Bewegung des Arbeitstisches 2 entlang der Kreistrajektorie 3 durch einen Schwenkarm-Roboter 4 mit vier Achsen realisiert. Ein Beispiel für eine alternativ ausgebildete, nicht die Erfindung betreffende Vorrichtung zur Bewegung der Strahlungsquelle zeigen die Figuren 12-17.

Bezugnehmend auf die Figur 12 ist ein Gonioradiometer mit einem Arbeitstisch 2 dargestellt, auf dem eine Strahlungsquelle 1 bzw. ein Scheinwerfermodul 10 angeordnet ist. Es sind in den Figuren 12-17 beide Varianten gleichzeitig dargestellt. Beide besitzen den gleichen Strahlungsschwerpunkt 11. Bei einer Messung ist immer nur eine Strahlungsquelle 1, 10 auf dem Arbeitstisch 2 angeordnet. Der Arbeitstisch 2 umfasst eine Oberfläche 20 und ist auf einer Kreistrajektorie bewegbar und hierfür um eine Kippachse A3 verschwenkbar. Gleichzeitig ist der Arbeitstisch 2 um eine Drehachse A4, die senkrecht auf der Oberfläche des Arbeitstisches 2 steht und durch den Strahlungsschwerpunkt 11 geht, drehbar. Insofern wird auf die Erläuterungen zu den Figuren 1 bis 11 Bezug genommen.

Der Unterschied zwischen dem Gonioradiometer der Figur 12 und dem Gonioradiometer der Figuren 1-11 liegt in der Vorrichtung zum Bewegen der Strahlungsquelle 1 auf einer Kreistrajektorie 3 und zur Realisierung der Drehachsen A3, A4. Hierzu sieht das Gonioradiometer der Figur 12 vor, dass die Vorrichtung 5 zwei Linearmechanismen und einen kombinierten Kipp- und Drehmechanismus aufweist.

Ein erster Linearmechanismus umfasst dabei eine Längsschiene 51 und einen Schlitten 52, der in Längsrichtung auf der Längsschiene 51 verfahrbar ist, um eine Längsbewegung der Vorrichtung zu realisieren. Ein zweiter Linearmechanismus 53, der an dem Schlitten 52 befestigt ist, ermöglicht, die Arbeitsplatte 2 in vertikaler Richtung zu verschieben. Der kombinierte Kipp- und Drehmechanismus umfasst einen Mechanismus 54, der eine Rotation des Arbeitstisches 2 um die Drehachse A4 ermöglicht, und einen Mechanismus 55, der ein Verschwenken der Arbeitsplatte 2 um die Kippachse A3 ermöglicht (wobei die Oberfläche 20 der Arbeitsplatte 2 wie erläutert tangential auf der Kreistrajektorie geführt wird).

Die Figuren 13-17 zeigen verschiedene Positionen des Gonioradiometers sowohl im Hinblick auf die Position des Arbeitstisches 2 entlang der Kreistrajektorie (wodurch der Abstrahlwinkel α eingestellt wird) als auch im Hinblick auf die Rotation der Arbeitsplatte um die Drehachse A4 (wodurch die Ebene des betrachteten Ebenensystems A eingestellt wird). Gonioradiometrische Messungen werden durch Messvorgänge entsprechend den Figuren 1-11 durchgeführt.

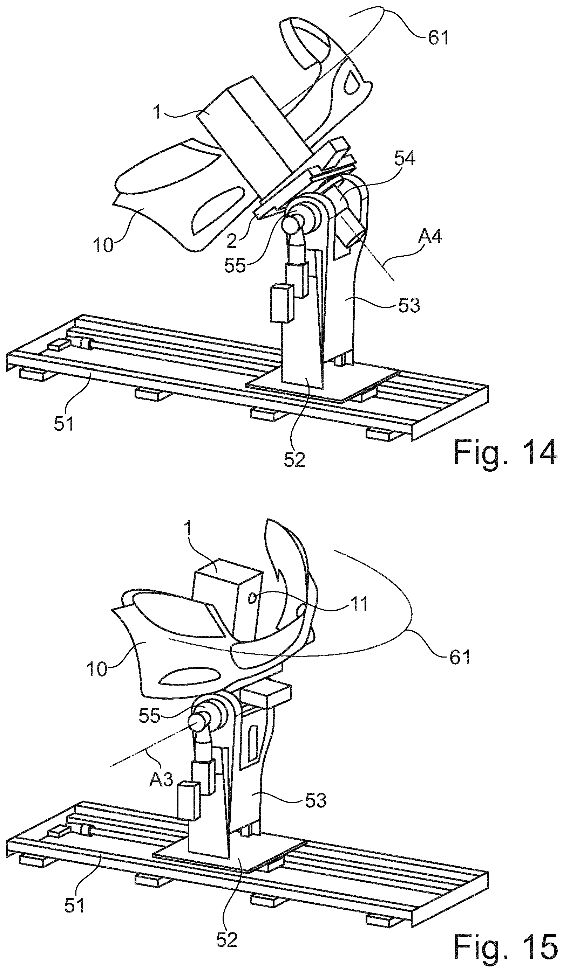

In der Figur 13 befindet sich das Gonioradiometer in einer Stellung, in der der Arbeitstisch 2 zwischen dem untersten Punkt und dem Punkt 32 der Kreistrajektorie angeordnet ist (siehe Figur 1). In der Figur 14 ist der Arbeitstisch 2 gegenüber der Figur 13 um die Achse A4 verdreht, was durch den Kreisbogen 61 illustriert ist. Durch Verdrehen um die Achse A4 kann ein Messvorgang realisiert werden, bei dem durch den (nicht dargestellten) Sensor Messwerte erfasst werden, die unterschiedlichen Ebenen des Ebenensystems A für den durch die Position des Arbeitstisches 2 auf der Kreistrajektorie eingestellten Abstrahlwinkel α entsprechen.

In der Figur 15 befindet sich das Gonioradiometer an einer Position am oder nahe dem untersten Punkt der Kreistrajektorie.

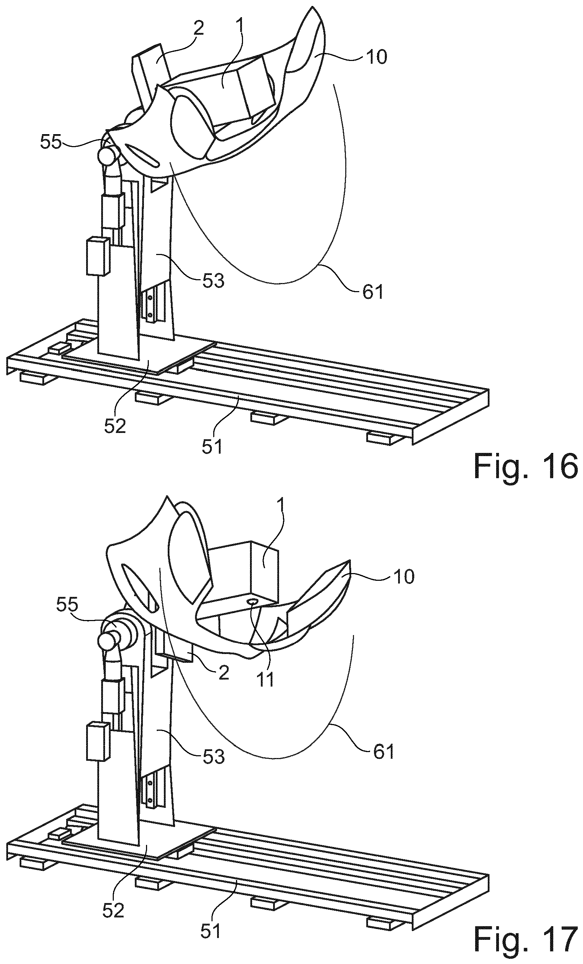

In der Figur 16 befindet sich das Gonioradiometer in einer Stellung, in der der Arbeitstisch 2 am oder fast am Punkt 31 der Kreistrajektorie angeordnet ist (siehe Figur 1). In der Figur 17 ist der Arbeitstisch 2 gegenüber der Figur 16 um die Achse A4 verdreht. Durch Verdrehen um die Achse A4 kann wiederum ein Messvorgang realisiert werden, bei dem durch den (nicht dargestellten) Sensor Messwerte erfasst werden, die unterschiedlichen Ebenen des Ebenensystems A für den durch die Position des Arbeitstisches 2 auf der Kreistrajektorie eingestellten Abstrahlwinkel α entsprechen.

Die Erfindung realisiert mittels des Gonioradiometers somit ein gonioradiometrisches Messverfahren, bei dem der Arbeitstisch 2 zur Einstellung unterschiedlicher Abstrahlwinkel α auf einer Kreistrajektorie 3 bewegt wird, in deren Mittelpunkt der Strahlungsschwerpunkt 11 liegt, und bei dem der Arbeitstisch 2 zur Einstellung verschiedener Ebenen des Ebenensystems A um die Drehachse A4 gedreht wird.

Einzelne Messvorgänge können entweder dadurch realisiert werden, dass der Arbeitstisch 2 während eines Messvorgangs um die Drehachse A4 gedreht wird, während der Abstrahlwinkel α durch die Position des Arbeitstisches 2 entlang der Kreistrajektorie 3 eine bestimmte Einstellung aufweist. Dabei werden Messwerte erfasst, die unterschiedlichen Ebenen des Ebenensystems A für den eingestellten Abstrahlwinkel α entsprechen. Für einen nachfolgenden Messvorgang wird der Abstrahlwinkel α inkremental geändert, indem der Arbeitstisch 2 inkremental auf dem Kreisbogen 3 verfahren wird. Anschließend wird der Arbeitstisch 2 während eines weiteren Messvorgang erneut um die Drehachse A4 gedreht. Dies wird solange durchgeführt, bis der Arbeitstisch die Kreistrajektorie 3 über einen Winkelbereich von 180° abgefahren hat (zwischen den Punkten 31, 32 der Figur 1). Alternativ kann vorgesehen sein, dass ein größerer oder geringerer Winkelbereich als 180° abgefahren wird, beispielsweise ein Winkelbereich von 200°. Dies hängt vom Abstrahlwinkel bzw. der Form des Lichtkegels der Strahlungsquelle und/oder der Position des mindestens einen Sensors ab.

Alternativ können Messvorgänge dadurch realisiert werden, dass der Arbeitstisch 2 während eines Messvorgangs auf der Kreistrajektorie 3 bewegt wird, während eine bestimmte Ebene des Ebenensystems A durch die Drehposition bzw. den Drehwinkel des Arbeitstisches auf der Drehachse A4 eingestellt ist. Dabei werden Messwerte erfasst, die unterschiedlichen Abstrahlwinkeln α innerhalb der jeweils eingestellten Ebene des Ebenensystems A entsprechen. Dabei kann vorgesehen sein, dass der Arbeitstisch die Kreistrajektorie 3 über einen Winkelbereich von 180° abfährt (zwischen den Punkten 31, 32 der Figur 1). Alternativ kann vorgesehen sein, dass ein größerer oder geringerer Winkelbereich als 180° abgefahren wird, beispielsweise ein Winkelbereich von 200°. Dies hängt vom Abstrahlwinkel bzw. der Form des Lichtkegels der Strahlungsquelle und/oder der Position des mindestens einen Sensors ab.

Für einen nachfolgenden Messvorgang wird eine inkrementell benachbarte Ebene des Ebenensystems A gewählt, indem der Arbeitstisch 2 inkremental um die Drehachse A4 gedreht wird. Anschließend wird der Arbeitstisch 2 während eines weiteren Messvorgang erneut auf der Kreistrajektorie 3 bewegt. Dies wird solange durchgeführt, bis alle Ebenen des Ebenensystems (mit einer notwendigen Rasterung) gemessen worden sind. Dabei können alle Ebenen im Bereich zwischen - 180° und 180° gemessen werden. Alternativ wird nur eine Teilmenge dieses Bereichs gemessen.

Es versteht sich, dass die Erfindung nicht auf die oben beschriebenen Ausführungsformen beschränkt ist und verschiedene Modifikationen und Verbesserungen vorgenommen werden können, ohne von den hier beschriebenen Konzepten abzuweichen. Weiter wird darauf hingewiesen, dass beliebige der beschriebenen Merkmale separat oder in Kombination mit beliebigen anderen Merkmalen eingesetzt werden können, sofern sie sich nicht gegenseitig ausschließen. Die Offenbarung dehnt sich auf alle Kombinationen und Unterkombinationen eines oder mehrerer Merkmale aus, die hier beschrieben werden und umfasst diese. Sofern Bereiche definiert sind, so umfassen diese sämtliche Werte innerhalb dieser Bereiche sowie sämtliche Teilbereiche, die in einen Bereich fallen.

## Patentansprüche

1. Gonioradiometer zur richtungsabhängigen Messung mindestens einer lichttechnischen oder radiometrischen Kenngröße einer optischen Strahlungsquelle (1, S), welches aufweist:
- mindestens einen Sensor (SR), der geeignet ist, die Strahlung der Strahlungsquelle (1, 10, S) zu messen,
- eine Vorrichtung (4, 5) zum Bewegen der Strahlungsquelle (1, 10, S) derart, dass der Sensor (SR) Messwerte aufnimmt, die die lichttechnische oder radiometrische Kenngröße auf einer Kugeloberfläche um den Strahlungsschwerpunkt (11, LS) der Strahlungsquelle (1, 10, S) angeben, wobei
- die Ausstrahlungsrichtung der lichttechnischen Kenngröße unter Verwendung eines Ebenensystems (A), dessen Ebenen sich in einer Schnittgeraden schneiden, die durch den Strahlungsschwerpunkt (11, LS) der Strahlungsquelle (S) geht, und unter Verwendung eines Abstrahlwinkels (α), der die Abstrahlrichtung (α) innerhalb einer betrachteten Ebene angibt, beschrieben wird, und
- jedem Messwert der lichttechnischen oder radiometrischen Kenngröße eine bestimmte Ebene des Ebenensystems (A) und ein bestimmter Abstrahlwinkel (α) innerhalb dieser Ebene zugeordnet ist,
- wobei die Vorrichtung (4, 5) zum Bewegen der Strahlungsquelle (1, 10, S) einen Arbeitstisch (2) mit einer Drehachse (A4) umfasst, auf dem die Strahlungsquelle (1, 10, S) befestigbar ist, wobei die Vorrichtung (4, 5) dazu vorgesehen und ausgebildet ist,
∘ den Arbeitstisch (2) zur Einstellung unterschiedlicher Abstrahlwinkel (α) tangential auf einer Kreistrajektorie (3) zu bewegen, in deren Mittelpunkt der Strahlungsschwerpunkt (11, LS) liegt,
∘ den Arbeitstisch (2) zur Einstellung verschiedener Ebenen des Ebenensystems (A) um die Drehachse (A4) zu drehen,
∘ wobei sowohl bei einer Bewegung auf der Kreistrajektorie (3) als auch bei einer Drehung um die Drehachse (A4) des Arbeitstischs (2) der Strahlungsschwerpunkt (11, LS) der auf dem Arbeitstisch (2) befestigten Strahlungsquelle (1, 10, S) ortsfest ist,
**dadurch gekennzeichnet, dass**
- die Vorrichtung (4, 5) zum Bewegen der Strahlungsquelle (S) durch einen Roboter gebildet ist, der mindestens zwei Schwenkarme (43, 44) und mindestens einen translatorischen Freiheitsgrad (L) aufweist, wobei die Drehachse (A4) des Arbeitstischs (2) eine der Schwenkachsen des Roboters bildet, und
- die Schwenkarme (43, 44) des Roboters dazu ausgebildet sind, derart zueinander ausgerichtet zu werden, dass sie als Schwinge wirken und in Zusammenwirkung mit der translatorischen Bewegung die Kreistrajektorie (3) des Arbeitstischs (2) realisieren.

2. Gonioradiometer nach Anspruch 1, **dadurch gekennzeichnet, dass** die Vorrichtung (4, 5) dazu vorgesehen und ausgebildet ist, den Arbeitstisch (2) während eines Messvorgangs um die Drehachse (A4) zu drehen, wobei während des Messvorgangs Messwerte erfasst werden, die unterschiedlichen Ebenen des Ebenensystems (A) für den jeweils eingestellten Abstrahlwinkel (α) entsprechen.

3. Gonioradiometer nach Anspruch 2, **dadurch gekennzeichnet, dass** zur Messung der lichttechnischen oder radiometrischen Kenngröße bei einem anderen Abstrahlwinkel (α) der Arbeitstisch (2) entlang der Kreistrajektorie (3) verfahren wird, bevor der Arbeitstisch (2) während eines weiteren Messvorgangs erneut um die Drehachse (A4) gedreht wird.

4. Gonioradiometer nach Anspruch 1, **dadurch gekennzeichnet, dass** die Vorrichtung (4, 5) dazu vorgesehen und ausgebildet ist, den Arbeitstisch (2) während eines Messvorgangs auf der Kreistrajektorie (3) zu bewegen, wobei während des Messvorgangs Messwerte erfasst werden, die unterschiedlichen Abstrahlwinkeln (α) innerhalb der jeweils eingestellten Ebene des Ebenensystems (A) entsprechen.

5. Gonioradiometer nach Anspruch 4, **dadurch gekennzeichnet, dass** zur Messung der lichttechnischen oder radiometrischen Kenngröße in einer anderen Ebene des Ebenensystems (A) der Arbeitstisch (2) um die Drehachse (A4) gedreht wird, bevor der Arbeitstisch (2) während eines weiteren Messvorgang erneut auf der Kreistrajektorie (3) bewegt wird.

6. Gonioradiometer nach einem der vorangehenden Ansprüche, **dadurch gekennzeichnet, dass** die Drehachse (A4) des Arbeitstisches (2) senkrecht zur Oberfläche (20) des Arbeitstisches (2) verläuft.

7. Gonioradiometer nach nach einem der vorangehenden Ansprüche, **dadurch gekennzeichnet, dass** der Roboter ein Schwenkarm-Roboter mit vier Achsen (A1-A4) ist, der zusätzlich translatorisch bewegbar ist.

8. Gonioradiometer nach einem der vorangehenden Ansprüche, **dadurch gekennzeichnet, dass** die Vorrichtung (4, 5) zum Bewegen der Strahlungsquelle (S) dazu ausgebildet ist, dass der Radius der Kreistrajektorie (3) einstellbar ist.

9. Gonioradiometer nach einem der vorangehenden Ansprüche, **dadurch gekennzeichnet, dass** der Mittelpunkt der Kreistrajektorie (3) in einer Höhe im Bereich zwischen 130 cm und 180 cm über dem horizontalen Erdboden, auf dem das Gonioradiometer steht, liegt.

10. Gonioradiometer nach einem der vorangehenden Ansprüche, **dadurch gekennzeichnet, dass** die Vorrichtung (4, 5) zum Bewegen der Strahlungsquelle (S) dazu vorgesehen und ausgebildet ist, den Arbeitstisch (2) tangential auf einer Kreistrajektorie (3) zu bewegen, die um eine raumfeste horizontale Achse (X1) verläuft.

11. Gonioradiometer nach einem der vorangehenden Ansprüche, **dadurch gekennzeichnet, dass** die Vorrichtung (4, 5) zum Bewegen der Strahlungsquelle (S) während eines Messvorgangs, bei dem der Arbeitstisch (2) um die Drehachse (A4) gedreht oder der Arbeitstisch (2) auf der Kreistrajektorie (3) bewegt wird, eine kontinuierliche Bewegung ausführt, wobei der Sensor (SR) dazu eingerichtet ist, während der kontinuierlichen Bewegung fortlaufend Messwerte aufzunehmen.

12. Gonioradiometer nach einem der vorangehenden Ansprüche, **dadurch gekennzeichnet, dass** der Sensor (S) im Fernfeld der Strahlungsquelle (1, 10, S) angeordnet ist.

13. Verfahren zur richtungsabhängigen Messung mindestens einer lichttechnischen oder radiometrischen Kenngröße einer optischen Strahlungsquelle (1, 10, S), wobei
- die Ausstrahlungsrichtung der lichttechnischen oder radiometrischen Kenngröße unter Verwendung eines Ebenensystems (A), dessen Ebenen sich in einer Schnittgeraden schneiden, die durch den Strahlungsschwerpunkt (11, LS) der Strahlungsquelle (1, 10, S) geht, und unter Verwendung eines Abstrahlwinkels (α), der die Abstrahlrichtung innerhalb einer betrachteten Ebene angibt, beschrieben wird,
- jedem Messwert der lichttechnischen oder radiometrischen Kenngröße eine bestimmte Ebene des Ebenensystems (A) und ein bestimmter Abstrahlwinkel (α) innerhalb dieser Ebene zugeordnet ist,
- die Messwerte mittels mindestens eines Sensors (SR) erfasst werden, der geeignet ist, die Strahlung der Strahlungsquelle (1, 10, S) zu messen, und
- die Strahlungsquelle (1, 10, S) bei einem Messvorgang derart bewegt wird, dass der Sensor (SR) Messwerte aufnimmt, die die lichttechnische oder radiometrischen Kenngröße auf einer Kugeloberfläche um den Strahlungsschwerpunkt (11, LS) der Strahlungsquelle (1, 10, S) angeben,
- wobei die Strahlungsquelle (1, 10, S) auf einem Arbeitstisch (2) mit einer Drehachse (A4) angeordnet ist und der Arbeitstisch (2)
∘ zur Einstellung unterschiedlicher Abstrahlwinkel (α) tangential auf einer Kreistrajektorie (3) bewegt wird, in deren Mittelpunkt der Strahlungsschwerpunkt (11, LS) liegt,
∘ zur Einstellung verschiedener Ebenen des Ebenensystems (A) um die Drehachse (A4) gedreht wird,
∘ wobei sowohl bei einer Bewegung auf der Kreistrajektorie (3) als auch bei einer Drehung um die Drehachse (A4) des Arbeitstischs (2) der Strahlungsschwerpunkt (11, LS) der auf dem Arbeitstisch (2) befestigten Strahlungsquelle (1, 10, S) ortsfest ist,
- wobei die Strahlungsquelle (1, 10, S) durch einen Roboter auf der Kreistrajektorie (3) und um die Drehachse (A4) bewegt wird, der mindestens zwei Schwenkarme (43, 44) und mindestens einen translatorischen Freiheitsgrad (L) aufweist, wobei die Drehachse (A4) des Arbeitstischs (2) eine der Schwenkachsen des Roboters bildet, und
- wobei die Schwenkarme (43, 44) des Roboters derart zueinander ausgerichtet werden, dass sie als Schwinge wirken und in Zusammenwirkung mit der translatorischen Bewegung die Kreistrajektorie (3) des Arbeitstischs (2) realisieren.

14. Verfahren nach Anspruch 13, **dadurch gekennzeichnet, dass** der Arbeitstisch (2) während eines Messvorgangs um die Drehachse (A4) gedreht wird, wobei während des Messvorgangs Messwerte erfasst werden, die unterschiedlichen Ebenen des Ebenensystems (A) für den jeweils eingestellten Abstrahlwinkel (α) entsprechen, oder dass der Arbeitstisch (2) während eines Messvorgangs auf der Kreistrajektorie (3) bewegt wird, wobei während des Messvorgangs Messwerte erfasst werden, die unterschiedlichen Abstrahlwinkeln (α) innerhalb der jeweils eingestellten Ebene des Ebenensystems (A) entsprechen.

15. Verfahren nach Anspruch 13 oder 14, **dadurch gekennzeichnet, dass** der Arbeitstisch (2) tangential auf einer Kreistrajektorie (3) bewegt wird, die um eine raumfeste horizontale Achse (X1) verläuft.

## Claims

1. Gonioradiometer for the direction-dependent measurement of at least one light-related or radiometric parameter of an optical radiation source (1, S), which has:
- at least one sensor (SR) suitable for measuring the radiation from the radiation source (1, 10, S),
- an apparatus (4, 5) for moving the radiation source (1, 10, S) in such a way that the sensor (SR) records measured values indicating the light-related or radiometric parameter on a spherical surface around the radiation centroid (11, LS) of the radiation source (1, 10, S), wherein
- the emission direction of the light-related parameter is described using a system of planes (A), the planes of which intersect on an intersecting line passing through the radiation centroid (11, LS) of the radiation source (S), and using a radiation angle (α) indicating the radiation direction (α) within a plane under consideration, and
- a specific plane of the system of planes (A) and a specific radiation angle (α) within that plane are assigned to each measured value of the light-related or radiometric parameter,
- wherein the apparatus (4, 5) for moving the radiation source (1, 10, S) comprises a work table (2) with an axis of rotation (A4), on which the radiation source (1, 10, S) can be fastened, wherein the apparatus (4, 5) is provided and designed
o to move the work table (2) tangentially on a circular trajectory (3), in the centre of which the radiation centroid (11, LS) is located, in order to set different radiation angles (α),
o to rotate the work table (2) around the axis of rotation (A4) in order to set different planes of the system of planes (A),
° wherein the radiation centroid (11, LS) of the radiation source (1, 10, S) fastened on the work table (2) is stationary both during a movement on the circular trajectory (3) and during a rotation around the axis of rotation (A4) of the work table (2),
**characterized in that**
- the apparatus (4, 5) for moving the radiation source (S) is formed by a robot having at least two swivel arms (43, 44) and at least one translational degree of freedom (L), wherein the axis of rotation (A4) of the work table (2) forms one of the swivel axes of the robot, and
- the swivel arms (43, 44) of the robot are designed to be aligned with each other in such a way that they act as a swing arm and, in cooperation with the translational movement, realize the circular trajectory (3) of the work table (2).

2. Gonioradiometer according to Claim 1, **characterized in that** the apparatus (4, 5) is provided and designed to rotate the work table (2) around the axis of rotation (A4) during a measurement process, wherein measured values corresponding to different planes of the system of planes (A) for the respectively set radiation angle (α) are recorded during the measurement process.

3. Gonioradiometer according to Claim 2, **characterized in that**, in order to measure the light-related or radiometric parameter at a different radiation angle (α), the work table (2) is moved along the circular trajectory (3) before the work table (2) is rotated again around the axis of rotation (A4) during a further measurement process.

4. Gonioradiometer according to Claim 1, **characterized in that** the apparatus (4, 5) is provided and designed to move the work table (2) on the circular trajectory (3) during a measurement process, wherein measured values corresponding to different radiation angles (α) within the respectively set plane of the system of planes (A) are recorded during the measurement process.

5. Gonioradiometer according to Claim 4, **characterized in that**, in order to measure the light-related or radiometric parameter in another plane of the system of planes (A), the work table (2) is rotated around the axis of rotation (A4) before the work table (2) is moved again on the circular trajectory (3) during a further measurement process.

6. Gonioradiometer according to one of the preceding claims, **characterized in that** the axis of rotation (A4) of the work table (2) runs perpendicular to the surface (20) of the work table (2).

7. Gonioradiometer according to one of the preceding claims, **characterized in that** the robot is a swivel-arm robot with four axes (A1-A4), which is also translationally movable.

8. Gonioradiometer according to one of the preceding claims, **characterized in that** the apparatus (4, 5) for moving the radiation source (S) is designed such that the radius of the circular trajectory (3) is adjustable.

9. Gonioradiometer according to one of the preceding claims, **characterized in that** the centre of the circular trajectory (3) is located at a height in the range between 130 cm and 180 cm above the horizontal ground on which the gonioradiometer stands.

10. Gonioradiometer according to one of the preceding claims, **characterized in that** the apparatus (4, 5) for moving the radiation source (S) is provided and designed to move the work table (2) tangentially on a circular trajectory (3) which runs around a spatially fixed horizontal axis (X1).

11. Gonioradiometer according to one of the preceding claims, **characterized in that** the apparatus (4, 5) for moving the radiation source (S) carries out a continuous movement during a measurement process, in which the work table (2) is rotated around the axis of rotation (A4) or the work table (2) is moved on the circular trajectory (3), wherein the sensor (SR) is configured to continuously record measured values during the continuous movement.

12. Gonioradiometer according to one of the preceding claims, **characterized in that** the sensor (S) is arranged in the far field of the radiation source (1, 10, S).

13. Method for the direction-dependent measurement of at least one light-related or radiometric parameter of an optical radiation source (1, 10, S), wherein
- the emission direction of the light-related or radiometric parameter is described using a system of planes (A), the planes of which intersect on an intersecting line passing through the radiation centroid (11, LS) of the radiation source (1, 10, S), and using a radiation angle (α) indicating the radiation direction within a plane under consideration,
- a specific plane of the system of planes (A) and a specific radiation angle (α) within that plane are assigned to each measured value of the light-related or radiometric parameter,
- the measured values are recorded by means of at least one sensor (SR) suitable for measuring the radiation from the radiation source (1, 10, S), and
- the radiation source (1, 10, S) is moved during a measurement process in such a way that the sensor (SR) records measured values indicating the light-related or radiometric parameter on a spherical surface around the radiation centroid (11, LS) of the radiation source (1, 10, S),
- wherein the radiation source (1, 10, S) is arranged on a work table (2) with an axis of rotation (A4) and the work table (2)
° is moved tangentially on a circular trajectory (3), in the centre of which the radiation centroid (11, LS) is located, in order to set different radiation angles (α),
o is rotated around the axis of rotation (A4) in order to set different planes of the system of planes (A),
° wherein the radiation centroid (11, LS) of the radiation source (1, 10, S) fastened on the work table (2) is stationary both during a movement on the circular trajectory (3) and during a rotation around the axis of rotation (A4) of the work table (2),
- wherein the radiation source (1, 10, S) is moved on the circular trajectory (3) and around the axis of rotation (A4) by a robot having at least two swivel arms (43, 44) and at least one translational degree of freedom (L), wherein the axis of rotation (A4) of the work table (2) forms one of the swivel axes of the robot, and
- wherein the swivel arms (43, 44) of the robot are aligned with each other in such a way that they act as a swing arm and, in cooperation with the translational movement, realize the circular trajectory (3) of the work table (2).

14. Method according to Claim 13, **characterized in that** the work table (2) is rotated around the axis of rotation (A4) during a measurement process, wherein measured values corresponding to different planes of the system of planes (A) for the respectively set radiation angle (α) are recorded during the measurement process, or **in that** the work table (2) is moved on the circular trajectory (3) during a measurement process, wherein measured values corresponding to different radiation angles (α) within the respectively set plane of the system of planes (A) are recorded during the measurement process.

15. Method according to Claim 13 or 14, **characterized in that** the work table (2) is moved tangentially on a circular trajectory (3) which runs around a spatially fixed horizontal axis (X1).

## Revendications

1. Radiogoniomètre permettant de mesurer en fonction de la direction au moins une caractéristique d'éclairage ou radiométrique d'une source de rayonnement optique (1, S), qui présente :
- au moins un capteur (SR) adapté pour mesurer le rayonnement de la source de rayonnement (1, 10, S),
- un dispositif (4, 5) pour déplacer la source de rayonnement (1, 10, S) de telle sorte que le capteur (SR) enregistre des valeurs de mesure qui indiquent la caractéristique d'éclairage ou radiométrique sur une surface sphérique autour du centre de gravité de rayonnement (11, LS) de la source de rayonnement (1, 10, S), dans lequel
- la direction de rayonnement de la caractéristique d'éclairage est décrite à l'aide d'un système de plans (A) dont les plans se coupent en une droite d'intersection passant par le centre de gravité de rayonnement (11, LS) de la source de rayonnement (S), et à l'aide d'un angle de rayonnement (α) qui indique la direction de rayonnement (α) dans un plan considéré, et
- un plan déterminé du système de plans (A) et un angle de rayonnement (α) déterminé à l'intérieur de ce plan sont associés à chaque valeur de mesure de la caractéristique d'éclairage ou radiométrique,
- le dispositif (4, 5) destiné à déplacer la source de rayonnement (1, 10, S) comprend une table de travail (2) présentant un axe de rotation (A4) sur laquelle la source de rayonnement (1, 10, S) peut être fixée, le dispositif (4, 5) étant prévu et conçu
o pour déplacer la table de travail (2), afin d'ajuster différents angles de rayonnement (α), tangentiellement sur une trajectoire circulaire (3) au centre de laquelle se trouve le centre de gravité de rayonnement (11, LS),
o pour faire tourner la table de travail (2) afin d'ajuster différents plans du système de plans (A) autour de l'axe de rotation (A4),
o le centre de gravité de rayonnement (11, LS) de la source de rayonnement (1, 10, S) fixée sur la table de travail (2) étant fixe aussi bien lors d'un déplacement sur la trajectoire circulaire (3) que lors d'une rotation autour de l'axe de rotation (A4) de la table de travail (2),
**caractérisé en ce que**
- le dispositif (4, 5) destiné à déplacer la source de rayonnement (S) est formé par un robot qui présente au moins deux bras pivotants (43, 44) et au moins un degré de liberté de translation (L), l'axe de rotation (A4) de la table de travail (2) formant l'un des axes de pivotement du robot, et
- les bras pivotants (43, 44) du robot sont conçus pour être orientés l'un par rapport à l'autre de telle sorte qu'ils agissent comme un balancier et, en coopération avec le mouvement de translation, réalisent la trajectoire circulaire (3) de la table de travail (2).

2. Radiogoniomètre selon la revendication 1, **caractérisé en ce que** le dispositif (4, 5) est prévu et conçu pour faire tourner la table de travail (2) autour de l'axe de rotation (A4) pendant un processus de mesure, des valeurs de mesure qui correspondent à différents plans du système de plans (A) pour l'angle de rayonnement (α) respectivement réglé étant acquises pendant le processus de mesure.

3. Radiogoniomètre selon la revendication 2, **caractérisé en ce que**, pour mesurer la caractéristique d'éclairage ou radiométrique pour un autre angle de rayonnement (α), la table de travail (2) est déplacée le long de la trajectoire circulaire (3) avant que la table de travail (2) ne soit à nouveau amenée à tourner autour de l'axe de rotation (A4) lors d'un autre processus de mesure.

4. Radiogoniomètre selon la revendication 1, **caractérisé en ce que** le dispositif (4, 5) est prévu et conçu pour déplacer la table de travail (2) sur la trajectoire circulaire (3) pendant un processus de mesure, des valeurs de mesure qui correspondent à différents angles de rayonnement (α) à l'intérieur du plan respectivement réglé du système de plans (A) étant acquises pendant le processus de mesure.

5. Radiogoniomètre selon la revendication 4, **caractérisé en ce que**, pour mesurer la caractéristique d'éclairage ou radiométrique dans un autre plan du système de plans (A), la table de travail (2) est amenée à tourner autour de l'axe de rotation (A4) avant que la table de travail (2) ne soit à nouveau déplacée sur la trajectoire circulaire (3) lors d'un autre processus de mesure.

6. Radiogoniomètre selon l'une des revendications précédentes, **caractérisé en ce que** l'axe de rotation (A4) de la table de travail (2) s'étend perpendiculairement à la surface (20) de la table de travail (2).

7. Radiogoniomètre selon l'une des revendications précédentes, **caractérisé en ce que** le robot est un robot à bras pivotants à quatre axes (A1-A4), qui est en outre mobile en translation.

8. Radiogoniomètre selon l'une des revendications précédentes, **caractérisé en ce que** le dispositif (4, 5) destiné à déplacer la source de rayonnement (S) est conçu pour que le rayon de la trajectoire circulaire (3) soit réglable.

9. Radiogoniomètre selon l'une des revendications précédentes, **caractérisé en ce que** le centre de la trajectoire circulaire (3) est situé à une hauteur comprise entre 130 cm et 180 cm au-dessus du sol horizontal sur lequel repose le radiogoniomètre.

10. Radiogoniomètre selon l'une des revendications précédentes, **caractérisé en ce que** le dispositif (4, 5) destiné à déplacer la source de rayonnement (S) est prévu et conçu pour déplacer la table de travail (2) tangentiellement sur une trajectoire circulaire (3) qui s'étend autour d'un axe horizontal (X1) fixe dans l'espace.

11. Radiogoniomètre selon l'une des revendications précédentes, **caractérisé en ce que** le dispositif (4, 5) destiné à déplacer la source de rayonnement (S) effectue un mouvement continu pendant un processus de mesure lors duquel la table de travail (2) est amenée à tourner autour de l'axe de rotation (A4) ou lors duquel la table de travail (2) est déplacée sur la trajectoire circulaire (3), le capteur (SR) étant configuré pour enregistrer en continu des valeurs de mesure pendant le mouvement continu.

12. Radiogoniomètre selon l'une des revendications précédentes, **caractérisé en ce que** le capteur (S) est disposé dans le champ lointain de la source de rayonnement (1, 10, S).

13. Procédé de mesure en fonction de la direction d'au moins une caractéristique d'éclairage ou radiométrique d'une source de rayonnement optique (1, 10, S), dans lequel
- la direction de rayonnement de la caractéristique d'éclairage ou radiométrique est décrite à l'aide d'un système de plans (A) dont les plans se coupent en une droite d'intersection passant par le centre de gravité de rayonnement (11, LS) de la source de rayonnement (1, 10, S), et à l'aide d'un angle de rayonnement (α) qui indique la direction du rayonnement dans un plan considéré,
- un plan déterminé du système de plans (A) et un angle de rayonnement (α) déterminé à l'intérieur de ce plan sont associés à chaque valeur de mesure de la caractéristique d'éclairage ou radiométrique,
- les valeurs de mesure sont acquises au moyen d'au moins un capteur (SR) qui est adapté pour mesurer le rayonnement de la source de rayonnement (1, 10, S), et
- la source de rayonnement (1, 10, S) est déplacée pendant un processus de mesure de telle sorte que le capteur (SR) enregistre des valeurs de mesure qui indiquent la caractéristique d'éclairage ou radiométrique sur une surface sphérique autour du centre de gravité de rayonnement (11, LS) de la source de rayonnement (1, 10, S),
- la source de rayonnement (1, 10, S) étant disposée sur une table de travail (2) présentant un axe de rotation (A4) et la table de travail (2)
o étant déplacée tangentiellement sur une trajectoire circulaire (3) au centre de laquelle se trouve le centre de gravité de rayonnement (11, LS), afin d'ajuster différents angles de rayonnement (α),
o étant amendée à tourner autour de l'axe de rotation (A4), afin d'ajuster différents plans du système de plans (A),
o le centre de gravité de rayonnement (11, LS) de la source de rayonnement (1, 10, S) fixée sur la table de travail (2) étant fixe aussi bien lors d'un déplacement sur la trajectoire circulaire (3) que lors d'une rotation autour de l'axe de rotation (A4) de la table de travail (2),
- la source de rayonnement (1, 10, S) étant déplacée sur la trajectoire circulaire (3) et autour de l'axe de rotation (A4) par un robot, qui présente au moins deux bras pivotants (43, 44) et au moins un degré de liberté de translation (L), l'axe de rotation (A4) de la table de travail (2) formant l'un des axes de pivotement du robot, et
- les bras pivotants (43, 44) du robot étant orientés l'un par rapport à l'autre de telle sorte qu'ils agissent comme un balancier et, en coopération avec le mouvement de translation, réalisent la trajectoire circulaire (3) de la table de travail (2).

14. Procédé selon la revendication 13, **caractérisé en ce que** la table de travail (2) est amenée à tourner autour de l'axe de rotation (A4) pendant un processus de mesure, des valeurs de mesure qui correspondent à différents plans du système de plans (A) pour l'angle de rayonnement (α) respectivement réglé étant acquises pendant le processus de mesure, ou **en ce que** la table de travail (2) est déplacée sur la trajectoire circulaire (3) pendant un processus de mesure, des valeurs de mesure qui correspondent à différents angles de rayonnement (α) à l'intérieur du plan respectivement réglé du système de plans (A) étant acquises pendant le processus de mesure.

15. Procédé selon la revendication 13 ou 14, **caractérisé en ce que** la table de travail (2) est déplacée tangentiellement sur une trajectoire circulaire (3) qui s'étend autour d'un axe horizontal (X1) fixe dans l'espace.
